(19) Europäisches Patentamt
European Patent Office
Office européen des brevets

(11) **EP 3 724 476 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **18811526.5**

(22) Anmeldetag: **29.11.2018**

(51) Internationale Patentklassifikation (IPC):
***F02D 41/00*** *(2006.01)*

(52) Gemeinsame Patentklassifikation (CPC):
**F02D 41/0097; F02D 41/009; G01D 5/208; G01P 3/481;** H02J 7/14; H02P 9/48

(86) Internationale Anmeldenummer:
**PCT/EP2018/082928**

(87) Internationale Veröffentlichungsnummer:
**WO 2019/115241 (20.06.2019 Gazette 2019/25)**

(54) **VERFAHREN UND VORRICHTUNG ZUR BESTIMMUNG EINER DREHWINKELPOSITION EINER KURBELWELLE EINER BRENNKRAFTMASCHINE**

METHOD AND DEVICE FOR DETERMINING A ROTATIONAL ANGLE POSITION OF A CRANKSHAFT OF AN INTERNAL COMBUSTION ENGINE

PROCÉDÉ ET DISPOSITIF DE DÉTERMINATION D'UNE POSITION D'ANGLE DE ROTATION D'UN VILEBREQUIN D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2017 DE 102017222863**

(43) Veröffentlichungstag der Anmeldung:
**21.10.2020 Patentblatt 2020/43**

(73) Patentinhaber: **Robert Bosch GmbH**
**70442 Stuttgart (DE)**

(72) Erfinder:
• **MADIVALA VEERABASAPPA, Vijaya Kumar**
**70839 Gerlingen (DE)**
• **REINEKE, Bastian**
**71701 Schwieberdingen (DE)**
• **MUELLER, Jonathan**
**70563 Stuttgart (DE)**
• **FISCHER, Wolfgang**
**71272 Renningen (DE)**
• **REICHE, Andre**
**70839 Gerlingen (DE)**
• **GRODDE, Stefan**
**70469 Stuttgart (DE)**

(56) Entgegenhaltungen:
EP-A2- 0 730 341     DE-A1- 4 327 485
DE-A1-102011 008 756     US-A1- 2010 176 756
US-A1- 2017 155 346

EP 3 724 476 B1

**Beschreibung**

Die vorliegende Erfindung betrifft ein Verfahren sowie eine Vorrichtung zur Bestimmung einer Drehgröße, insbesondere einer Drehwinkelposition einer Welle, insbesondere einer Kurbelwelle einer Brennkraftmaschine, welche mit einer elektrischen Maschine, umfassend einen Rotor und einen Stator mit zumindest zwei Phasenwicklungen, aus denen jeweils zumindest ein Phasensignal abgeleitet wird, direkt oder übersetzt gekoppelt ist.

Stand der Technik

Die Drehzahl der Kurbelwelle einer Brennkraftmaschine ist eine wesentliche Eingangsgröße für viele Funktionen der elektronischen Motorsteuerung. Zu ihrer Ermittlung können auf einem mit der Kurbelwelle der Brennkraftmaschine rotierenden Körper in gleichen Winkelabständen Markierungen vorgesehen sein. Das Vorbeistreichen einer Markierung in Folge der Kurbelwellendrehung kann durch einen Sensor erfasst und als elektrisches Signal an eine Auswerteelektronik weitergegeben werden.

Diese Elektronik bestimmt für die jeweilige Drehwinkelposition der Kurbelwelle das jeweils hierfür hinterlegte Signal für die Markierung bzw. misst eine Zeitdifferenz zwischen zwei Markierungen und kann aufgrund der bekannten Winkelabstände zweier Markierungen zueinander, die Winkelgeschwindigkeit und daraus die Drehzahl ermitteln. Bei Kraftfahrzeugen, insbesondere Motorrädern, Mopeds oder Krafträdern, können die Markierungen beispielweise durch Zähne eines metallischen Zahnrads, vorzugweise aus einem ferromagnetischen Material, eines sogenannten Geberrads bereitgestellt werden, welche durch ihre Bewegung in dem Sensor eine Änderung des Magnetfelds bewirken. Eine Lücke von einigen Zähnen kann als Bezugsmarke zur Erkennung der absoluten Position dienen.

Während bei Pkw's zumeist 60-2 Zähne verwendet werden (gleichmäßige Verteilung von 60 Zähnen, wobei 2 Zähne als Bezugsmarke ausgespart bleiben), kommen bei Motor- bzw. Krafträdern beispielsweise auch 36-2, 24-2 Zähne zum Einsatz. Bei diesem indirekten Prinzip der Drehgeschwindigkeitsbestimmung bzw. der Bestimmung einer Drehwinkelposition der Kurbelwelle wird die Auflösung des Drehzahlsignals bzw. die absolute Erfassung der Drehwinkelposition durch die Anzahl der Zähne und durch eine sichere Erkennung der Bezugsmarke bestimmt.

Bei jedem modernen Fahrzeug mit Brennkraftmaschine ist ein Generator verbaut, der durch die Drehung der Kurbelwelle angetrieben wird. Diese liefert elektrische Signale und dient zur Versorgung des Fahrzeugs mit elektrischer Energie und zum Aufladen der Fahrzeugbatterie. Der vorgesehene Betrieb eines Fahrzeugs ohne diesen Generator, ist nicht oder nur für sehr kurze Zeit möglich.

Eine Nutzung der elektrischen Ausgangsgrößen einer über die Kurbelwelle angetriebenen elektrischen Maschine (Generator) wird beispielsweise in der EP 0664887 B1 zur Drehzahlbestimmung verwendet. Hierzu wird eine Phase des Generators als Referenz zur Verfügung gestellt, an welcher eine pulsierende Gleichspannung anliegt. Bei Verwendung mehrerer Phasen zur Drehzahlbestimmung werden üblicherweise die jeweiligen Signale der Phasen erfasst und die jeweiligen Signale gesondert an eine Auswerteeinheit weitergeleitet, die aus den Signalen die Drehzahl des Generators ermittelt. Ein weiteres Beispiel für die Nutzung der elektrischen Ausgangsgrößen einer elektrischen Maschine zur Position- und Drehzahlbestimmung findet sich in der US 2017/155346 A1.

Es wäre daher wünschenswert eine Möglichkeit anzugeben, die Ermittlung einer Drehgröße, insbesondere der Drehwinkelposition, aus den Phasensignalen einer elektrischen Maschine noch weiter zu vereinfachen und auch ohne den Einsatz zusätzlicher Bauteile zumindest die Drehwinkelposition bzw. Winkelposition des Rotors der elektrischen Maschine bzw. der Kurbelwelle der Brennkraftmaschine, die zur Steuerung einer Brennkraftmaschine verwendbar ist, noch einfacher und gegebenenfalls in noch besserer Genauigkeit zu erhalten.

Offenbarung der Erfindung

Erfindungsgemäß wird ein Verfahren mit den Merkmalen des Anspruchs 1 sowie eine Vorrichtung mit den Merkmalen des Anspruchs 9 vorgeschlagen. Vorteilhafte Ausgestaltungen sind Gegenstand der Unteransprüche sowie der nachfolgenden Beschreibung.

Vorteile der Erfindung

Die Erfindung betrifft ein Verfahren zur Bestimmung einer Drehgröße einer Welle, insbesondere einer Kurbelwelle einer Brennkraftmaschine, welche mit einer elektrischen Maschine, umfassend einen Rotor und einen Stator mit zumindest zwei Phasenwicklungen, aus denen jeweils zumindest ein Phasensignal abgeleitet wird, direkt oder übersetzt gekoppelt ist, wobei die Phasensignale jeweils aufsteigende Flanken, abfallende Flanken und Nulldurchgänge aufweisen, wobei ein Summensignal, umfassend mehrere Phasensignale der elektrischen Maschine derart erzeugt wird, dass den aufsteigenden Flanken, abfallenden Flanken und Nulldurchgängen jeweils ein charakteristischer Puls im Summensignal zugeordnet wird, wobei die Größe zur Ermittlung der Drehgröße des Rotors der elektrischen Maschine herangezogen wird. Die Drehgröße umfasst hierbei insbesondere eine Drehwinkelposition einer Welle, vorzugsweise einer Rotorwelle, wobei die Rotorwelle mit der Kurbelwelle der Brennkraftmaschine fest oder übersetzt gekoppelt oder koppelbar ist. Somit lässt sich bei Kenntnis der jeweiligen Drehgrößen der Rotorwelle unmittelbar auf eine entsprechende Drehgröße der Kurbelwelle der Brennkraftmaschine schließen.

Das Summensignal wird im Rahmen des Verfahrens aus den Phasensignalen der zumindest zwei Phasen der elektrischen Maschine erzeugt. Die Erzeugung eines Summensignals, dass zur Ermittlung einer Drehgröße, insbesondere einer Drehwinkelposition, verwendet wird, ist besonders vorteilhaft, da dieses eine Summensignal mittels einer einzigen Signalleitung an eine Auswerteinheit, insbesondere an ein Steuergerät, weitergeleitet werden kann, um dort anhand des Summensignals die einzelnen den Drehgrößen zugrundliegenden Drehinformationen der jeweiligen Generatorphasen aus deren Signalen abzuleiten, wodurch die Drehwinkelposition der Welle nicht nur besonders einfach und auf Basis einer besonders einfachen Signalleitungsinfrastruktur, sondern auch mit der üblichen Genauigkeit ermittelbar ist. Dies wird insbesondere dadurch bewirkt, dass den jeweiligen aufsteigenden Flanken, abfallenden Flanken und/oder Nulldurchgängen der einzelnen Signaturen im jeweiligen Phasensignal ein charakteristischer Puls im Summensignal zugeordnet wird, wobei anhand der Signatur der einzelnen Pulse im Summensignal die entsprechenden Drehgrößen ableitbar sind.

Dieses Verfahren ist besonders vorteilhaft, da im Stand der Technik üblicherweise die Signale der jeweiligen Phasen mittels jeweils einer der jeweiligen Phase zugeordneten Signalleitung an eine Auswerteinheit weitergeleitet wird, um diese dort einer Auswertung zuzuführen. Dies ist entsprechend aufwendig und kostenintensiv.

Im Rahmen der Erfindung ist es bevorzugt, dass zumindest ein Wert zumindest einer der Pulse, die mit den aufsteigenden Flanken des Phasensignals, mit den abfallenden Flanken des Phasensignals und/oder mit Nulldurchgänge des Phasensignals assoziiert sind zur Übermittlung der jeweiligen Pulse im Summensignal herangezogen werden, wodurch deren zeitliche Absolutposition sowie deren relativen Abstand zueinander bestimmbar und hieraus insbesondere die Drehwinkelposition der Welle bestimmbar ist. Diese Ausgestaltung ist besonders vorteilhaft, da sowohl aufsteigende Flanken, abfallende Flanken als auch Nulldurchgänge des Phasensignals, die entsprechend durch die zuvor beschriebene Kodierung in Pulse innerhalb des Summensignals übersetzt werden, besonders einfach und exakt detektierbar sind, was eine Ermittlung der zuvor bezeichneten Drehgrößen der Welle entsprechend sicher und exakt macht. Bei den Phasensignalen kann es sich um das Rohsignal der Startorphasen handeln. Es kann jedoch auch ein entsprechend elektronisch aufgearbeitetes Phasensignal verwendet werden.

In einer weiteren bevorzugten Ausführungsform werden durch Kodierung der abfallenden Flanken der jeweiligen Phasensignale erste Pulse und durch Kodierung der aufsteigenden Flanken der jeweiligen Phasensignale jeweils weitere Pulse im Summensignal erzeugt. Durch eine entsprechend unterschiedliche Wahl der Pulse ist zumindest ein Kriterium gegeben, um die aufsteigenden Flanken und absteigenden Flanken in ihrer in Pulse übersetzten Form entsprechend im Summensignal unterscheidbar zu machen. Es sei nochmals angemerkt, dass die zeitliche Position der jeweiligen Flanken und deren Art, aufsteigende Flanken und/oder abfallende Flanken, entsprechend in die Pulse im Summensignal übersetzt und unterscheidbar sind.

Dabei weisen die Pulse, die einem ersten Flankentyp, aufweisend aufsteigende Flanken oder absteigende bzw. abfallende Flanken, zugeordnet sind, eine konstante erste Pulsbreite auf und die einem entsprechend anderen Flankentyp zugeordnet sind eine für die jeweiligen Phasensignale konstante aber bezüglich des jeweils anderen Flankentyps und/oder der jeweils anderen Phasen verschiedene weitere Pulsbreiten auf. Diese Ausgestaltung ist vorteilhaft, da auf diese Weise durch die Wahl von konstanten Pulsbreiten für den einen Flankentyp die Flanken dieses Typs entsprechend einfach im Summensignal detektierbar sind. Hierdurch lässt sich die Anzahl unterschiedlicher Pulsbreiten ohne Informationsverlust verringern. Je nach Ausgestaltung der Auswerte-Algorithmen für das Summensignal zur Zuordnung der einzelnen Pulse zu ihren jeweiligen Flankentypen und Phasensignalen kann diese dadurch vereinfacht werden. Entsprechend kann für die jeweilige Flankenart bzw. Flankentyps und/oder die jeweilige Phase eine charakteristische Pulsbreite gewählt werden, wodurch der jeweilige Flankentyp und die damit verknüpfte Phase eindeutig zuordenbar ist.

Dies ist im Rahmen einer bevorzugten Ausführungsform insbesondere dadurch gegeben, dass durch die Ermittlung der ersten Pulsbreite im Summensignal auf den ersten Flankentyp erkannt und per Ermittlung einer der weiteren Pulsbreiten im Summensignal auf den entsprechend anderen Flankentyp erkannt wird.

Im Rahmen einer weiteren bevorzugten Ausführungsform des Verfahrens kann durch Ermitteln zumindest einer Zeitdifferenz zwischen zwei Pulsen die dem gleichen Flankentyp (aufsteigende oder abfallende Flanken) entsprechen aus dem Summensignal die Drehzahl des Rotors der elektrischen Maschine ermittelt werden. Vorzugsweise werden Flanken desselben Typs verwendet, die auf eine der Phasen zurückzuführen ist. Wie bereits erwähnt, ist bei einer Wahl von gleichen Pulsdauern für den einen Flankentyp unabhängig von der Phase eine besonders einfache Möglichkeit gegeben, anhand der Relativabstände der Pulse zueinander die Drehzahl der elektrischen Maschine zu ermitteln. In einer weiteren bevorzugten Ausführungsform werden Drehzahlen auf Basis von zwei benachbarten Pulsen, vorzugsweise von unmittelbar benachbarten Pulsen ermittelt.

In einer weiteren bevorzugten Ausführungsform des Verfahrens wird durch Ermitteln zumindest einer ersten zeitlichen Abfolge an Pulsen auf eine erste Drehrichtung oder durch Ermitteln zumindest einer weiteren zeitlichen Abfolge an Pulsen auf eine weitere, zu ersten Drehrichtung verschiedenen Drehrichtung des Rotors, geschlossen. Die jeweiligen Flanken innerhalb der Phasensignale sind bedingt durch festgelegte Maschinenparameter, wie die Anordnung der Polpaare innerhalb der elektrischen Maschine und weiterer Größen entsprechend zeitlich determiniert. Mittels einer Auswertung der Abfolge entsprechender Pulse in deren zeitlicher Reihenfolge kann somit auf die Drehrichtung des Rotors der elektrischen Maschine geschlossen werden. Hierzu werden die Flanken aus den jeweiligen Phasensignalen und ihre Flankentypen (aufsteigend oder absteigend) jeweils mit unterschiedlichen Pulsbreiten im Summensignal kodiert, um diese hierdurch unterscheidbar zu machen. Aus einer entsprechenden Abfolge an absteigenden Flanken und aufsteigenden Flanken aus den jeweiligen Phasensignalen kann somit auf Grundlage des Summensignals auf die Drehrichtung des Rotors innerhalb der elektrischen Maschine geschlossen werden.

In einer weiteren bevorzugten Ausführungsform des Verfahrens wird durch Ermitteln der Pulsbreiten die jeweiligen Pulse ermittelt und unter Heranziehung von Eigenschaften der elektrischen Maschine, aus den jeweiligen Pulsen die Drehwinkelposition des Rotors der elektrischen Maschine ermittelt. Durch Ermitteln der Pulsbreiten kann somit, wie zuvor bereits beschrieben, auf abfallende Flanken und auf aufsteigende Flanken, aufgelöst nach den jeweiligen Phasensignalen geschlossen werden. Da, wie bereits ebenfalls beschrieben, die einzelnen Flanken mit Maschinenparametern, wie der räumlichen Anordnung der Polpaare innerhalb der elektrischen Maschine zusammenhängen, kann durch Ermitteln einer jeweiligen Flanke und Verknüpfung mit den Maschinenparametern zumindest auf das entsprechende Winkelinkrement geschlossen werden, innerhalb dem sich der Rotor zum Zeitpunkt der Detektion der jeweiligen Flanke innerhalb des Summensignals gerade bewegt. Hieraus kann entsprechend auf die Drehwinkelposition des Rotors geschlossen werden.

In einer weiteren bevorzugten Ausführungsform des Verfahren wird die Drehwinkelposition des Rotors weiter unter Heranziehung eines Drehzahlwerts zwischen zwei benachbarten Pulsen und zumindest einem zeitlichen Abstand zwischen einer Position und zumindest einem der Pulse ermittelt. Die zuvor bezeichnete Position ist eine beliebige zeitliche Position innerhalb des Summensignals, zu dem eine entsprechende Drehwinkelposition des Rotors ermittelt werden soll. Dies kann insbesondere im laufenden Betrieb der elektrischen Maschine, aber auch bei Deaktivierung der Brennkraftmaschine erfolgen, die die elektrischen Maschinen antreibt. Der zuletzt genannte Fall eignet sich insbesondere dazu, die Ruheposition des Rotors der elektrischen Maschine zu bestimmen. Wie bereits zuvor beschrieben, kann durch das Heranziehen der Pulse, die mit den jeweiligen Flanken der Phasen verknüpft sind, und der weiteren Heranziehung der Maschinenparameter auf das Winkelinkrement geschlossen werden, in dem sich der Rotor zum Zeitpunkt der Positionsbestimmung gerade befindet. Durch die weitere Heranziehung eines Drehzahlwertes, der eine zeitliche Änderung des Winkelinkrements angibt und einem entsprechenden zeitlichen Abstand der Position zu den jeweiligen Pulsen kann die Position innerhalb des Winkelinkrements noch genauer bestimmt werden.

Des Weiteren betrifft die Erfindung eine Vorrichtung zur Erzeugung eines Summensignals aus mehreren Phasensignalen, das zur Bestimmung einer Drehgröße, insbesondere einer Drehwinkelposition einer Welle, insbesondere einer Kurbelwelle einer Brennkraftmaschine verwendbar ist, welche mit einer elektrischen Maschine, umfassend einen Rotor und einem Stator mit zumindest zwei Phasenwicklungen aus dem jeweils zumindest einen Phasensignal, aufweisend aufsteigende Flanken, abfallende Flanken und Nulldurchgänge, ableitbar ist, direkt oder übersetzt gekoppelt ist. Die Vorrichtung weist hierbei zumindest zwei Eingänge auf, über die jeweils ein Phasensignal zu einer Kodiereinheit geleitet wird, wobei die Kodiereinheit die einzelnen Phasensignale zu einem Summensignal zusammenfasst und zumindest eines der Phasensignale derart kodiert, dass den aufsteigenden Flanken und/oder abfallenden Flanken des zumindest einen Phasensignals jeweils ein charakteristischer Puls im Summensignal zugeordnet wird, wobei die Kodiereinheit das Summensignal an einen Ausgang zur Ermittlung einer Drehgröße ausgibt, dadurch gekennzeichnet, dass die Pulse, die einem ersten Flankentyp, aufweisend aufsteigende Flanken (FlUu, FlVu, FlWu) oder absteigende Flanken (FlUd, FlVd, FlWd) zugeordnet sind, eine konstante erste Pulsbreite (TPf1, TPf2, TPf3) aufweisen und die Pulse, die einem entsprechend anderen Flankentyp zugeordnet sind, konstante aber zueinander verschiedene weitere Pulsbreiten (TPr1 , TPr2, TPr3) aufweisen. Analog zum erfindungsgemäßen Verfahren ist eine Ermittlung der Drehwinkelposition bzw. Winkelposition des Rotors aus dem Summensignal besonders einfach handhabbar, da es zur Weiterleitung des Summensignals an eine Auswerteeinrichtung, lediglich einer Datenleitung bedarf. Die für eine Ermittlung der jeweiligen Drehgröße erforderlichen charakteristischen Größen aus den Phasensignalen, nämlich, die jeweiligen Flanken der jeweiligen Phasensignale werden ebenfalls, wie bereits zuvor beschrieben, in entsprechende Pulse innerhalb des Summensignals übersetzt, wobei deren Auswertung aus dem Summensignal ohne Verlust von Information möglich ist.

Durch die Kodiereinheit werden somit die Flanken innerhalb der jeweiligen Phasensignale im Summensignal derart kodiert, dass diese in den Flanken unmittelbar zuordenbaren Pulse übersetzt werden, wodurch eine besonders genaue Ermittlung der Drehgrößen bei erheblich vereinfachter Auswertungsinfrastruktur gewährleistet werden kann.

In einer weiteren bevorzugten Ausführungsform der Vorrichtung weist die Kodiereinheit zumindest ein Totzeitglied auf, welches zumindest einer Phase der elektrischen Maschine zuordenbar ist, und dem zumindest einen Phasensignal eine charakteristische Eigenschaft aufprägt. Dieses Totzeitglied dient dazu, insbesondere zusammen mit einer Kombination mehrerer Xor-Gatter, dem zumindest ein Phasensignal jeweils eine charakteristische Eigenschaft aufzuprägen. Dies wird besondere dadurch bewirkt, dass durch die entsprechende Ausgestaltung des Totzeitgliedes dem Puls, der jeweils einer entsprechenden aufsteigenden oder abfallenden Flanke des Phasensignals zugeordnet wird, eine entsprechend charakteristische Pulsdauer zugeordnet wird. Durch Verwendung unterschiedlicher Totzeitglieder für die verschiedenen Phasensignale kann dem jeweiligen Phasensignal abhängig vom jeweilig verwendeten Totzeitglied eine charakteristische Eigenschaft aufgeprägt werden, somit können, wie zuvor bereits beschrieben, den einzelnen Flankenarten, aus den jeweiligen Phasensignalen grundsätzlich unterschiedliche Eigenschaften, insbesondere in Form von unterschiedlichen Pulsdauern, aufgeprägt werden.

Darüber hinaus versteht sich, dass teilweise den charakteristischen Features aus den Phasensignalen, insbesondere einem der beiden Flankentypen (aufsteigende oder absteigende Flanken) der jeweiligen Phasensignale auch gleiche Pulsdauern zugeordnet werden können, und lediglich den Flanken des entsprechend anderen Flankentyps je Phasensignal eine unterschiedliche Pulsdauer zugeordnet wird, um diese unterscheidbar zu machen. Die Wahl der Pulsdauern der jeweiligen Pulse werden innerhalb des zumindest einen Totzeitglieds vorzugsweise mittels zumindest eines Kondensators und/oder zumindest eines Widerstands bewirkt. Die jeweiligen Zeitkonstanten sind hierbei durch eine entsprechende Wahl des Widerstands bzw. der Kapazität des Kondensators gegeben. Die Signale aus den jeweiligen den Phasen zugeordneten Kodiereinheiten werden im Anschluss, vorzugsweise durch ein Und-Gatter, miteinander verknüpft und ein Summensignal gebildet.

In einer weiteren bevorzugten Ausführungsform ist der Kodiereinheit eine Triggerschaltung vorgeschaltet, die ein getriggertes Phasensignal erzeugt, welches an zumindest einen der Eingänge der Kodiereinheit übergeben wird. Die Triggerschaltung bewirkt, dass die Flanken des Phasensignals in einem getriggerten Phasensignal, verglichen mit dem Eingangssignal deutlich stärker ausgeprägt werden, was eine Erkennung der Flanken und eine entsprechend zeitlich korrekte Übersetzung der Flanken in einen Puls im Summensignal besonders einfach umsetzbar macht. Durch die entsprechend höhere zeitliche Auflösung der Flankenlage, kann somit aus dem Summensignal die Drehgröße, insbesondere die Drehwinkelposition des Rotors noch genauer ermittelt werden.

In einer bevorzugten Ausführungsform weist die Triggerschaltung ein Totzeitglied, aufweisend einen Widerstand und einen Kondensator auf. Durch eine entsprechende Wahl des Widerstands und des Kondensators kann die Weiterleitung des getriggerten Phasensignals im Zeitbereich des Phasensignals um den Nulldurchgang entsprechend unterdrückt werden. Diese Ausgestaltung ist besonders vorteilhaft, da insbesondere um die Nulldurchgänge der Phasenspannungen durch Nichtgleichgewichtszustände Störungen im Signal auftreten können, welche durch eine derartige Schaltung besonders effektiv absepariert bzw. unterdrückt werden können. Die jeweiligen Zeitkonstanten sind hierbei durch eine entsprechende Wahl des Widerstands bzw. der Kapazität des Kondensators gegeben. Grundsätzlich versteht sich, dass die zuvor beschriebenen Xor-Gatter auch durch entsprechende andere elektronische Schaltungen mit vergleichbarer Funktionalität substituierbar sind.

In einer weiteren bevorzugten Ausführungsform des Verfahrens wird aus dem zeitlichen Verlauf der Drehzahl innerhalb einer ersten Umdrehung der Welle ein Drehzahlsignal ermittelt, wobei im Rahmen einer Frequenzanalyse Frequenzanteile höherer Ordnung ermittelt werden, wobei eine korrigierte Drehzahl für eine weitere Umdrehung der Welle derart ermittelt wird, dass zumindest einer der Frequenzanteile höherer Ordnung, vorzugweise der Anteil 6 der Ordnung und/oder der Anteil 12 der Ordnung und/oder der Anteil 18 der Ordnung im korrigierten Drehzahlsignal unterdrückt wird.

Vorzugsweise werden Ordnungen korrigiert, die direkt von der Periodizität der elektrischen Maschine abhängen. Diese können folgendermaßen bestimmt werden (die in Klammern angegebenen Werte ergeben sich am Beispiel einer dreiphasigen elektrischen Maschine mit sechs Polpaaren):

Sei N die Anzahl an Phasen und p die Polpaarzahl der elektrischen Maschine. Damit ergeben sich pro Umdrehung der Welle der elektrischen Maschine N mal p elektrische Perioden, die jeweils einen Nulldurchgang mit steigender und fallender Flanke aufweisen. Die Gesamtzahl A an Stützstellen eines entsprechenden Drehzahlsignals beträgt daher:

$$A = 2 * N * p, (= 2 * 3 * 6 = 36)$$

Eine dritte Ordnung $O_3$ ergibt sich aus einem möglichen unterschiedlichen Verhalten von steigenden und fallenden Flanken (unabhängig von der Phase). Die Anzahl entsprechender steigender Flanken $F_s$ oder fallender $F_f$ pro Umdrehung der Welle der elektrischen Maschine beträgt dabei:

$$F_s = F_f = N * p, (= 3 * 6 = 18)$$

Eine zweite Ordnung $O_2$ ergibt sich aus einem möglichen unterschiedlichen Verhalten der N verschiedenen Phasen.

Die Anzahl der entsprechenden Flanken $F_p$ pro Umdrehung der Welle der elektrischen Maschine beträgt dabei:

$$F_p = 2 * p, (= 2 * 6 = 12)$$

Eine erste Ordnung $O_1$ ergibt sich aus einem möglichen unterschiedlichen Verhalten der steigenden und fallenden Flanken der einzelnen Phasen.

Die Anzahl der entsprechenden steigender Flanken $F_{sp}$ oder fallenden Flanken $F_{fp}$ pro Umdrehung der Welle der elektrischen Maschine beträgt dabei:

$$F_{sp} = F_{fp} = p, (= 6)$$

Bezogen auf eine Umdrehung der Welle der elektrischen Maschine (Grundfrequenz) ergeben sich die überwiegend Maschinen-relevanten Ordnungen, die gegebenenfalls kompensiert werden müssen aus der Anzahl der oben genannten unterschiedlichen Flanken:

- Ordnung $O_1$ (=6) für Abweichungen zwischen steigenden und fallenden Flanken der einzelnen Phasen entsprechend der Polpaarzahl
- Ordnung $O_2$ (=12) für Abweichungen zwischen Flanken der unterschiedlichen Phasen entsprechend der doppelten Polpaarzahl
- Ordnung $O_3$ (=18) für Abweichungen zwischen steigenden und fallenden Flanken (unabhängig der Phase) entsprechend der doppelten Polpaarzahl mal Flankenzahl

Es versteht sich grundsätzlich, dass auch andere Frequenzanteile, die von der Grundfrequenz abweichen, berücksichtigt werden können. Ferner versteht sich, dass das Drehzahlsignal von der Zeitdomäne in die Frequenzdomäne, insbesondere zur Durchführung der Frequenzanalyse, transformierbar ist. Nach einer Bereinigung des Drehzahlsignals von zumindest einem Beitrag höherer Ordnung, ist dieses auch wieder von der Frequenzdomäne in die Zeitdomäne zurücktransformierbar, um den zeitlichen Verlauf der korrigierten Drehzahl zu erhalten. Diese Transformationen können insbesondere mittels FFT-Verfahren (Fast Fourier Transformation) oder vergleichbaren Verfahren bewerkstelligt werden.

Das Drehzahlsignal, das als fundamentale Drehzahlfrequenz vorliegt, wird typischerweise von Störeinflüssen überlagert, die durch konstruktive Merkmale der elektrischen Maschine bedingt sind, und in der Regel ein ganzzahliges vielfaches der Grundfrequenz betragen. Diese Frequenzanteile höherer Ordnung können im Rahmen einer Frequenzanalyse des Drehzahlsignals in einer ersten Umdrehung erfasst und diese charakteristischen Drehzahlanteile extrahiert werden, der Gestalt, dass diese im Rahmen einer weiteren Umdrehung der Welle unterdrückt bzw. derart ausselektiert werden, dass die Frequenzanteile höherer Ordnung aus dem Signal absepariert werden, wodurch eine deutlich bessere Signalgüte erreicht wird. Auch andere störende Frequenzanteile, die nicht exakt eine höhere harmonische der Grundfrequenz treffen, sind im Rahmen der zuvor genannten Maßnahme berücksichtigbar, weshalb unter einer Frequenz höherer Ordnung allgemein eine zur Grundfrequenz, entsprechend dem Drehzahlbeitrag, verschiedene Frequenz zu verstehen ist.

Die jeweiligen Ordnungen der Frequenzanteile, insbesondere die 6., 12. und 18. Ordnung als harmonischen der Grundfrequenz, im Falle einer elektrischen Maschine mit drei Phasen, sind hierbei mit detektierbaren Fehlerquellen der elektrischen Maschine assoziierbar und können entsprechend gezielt unterdrückt werden, was zu einer Verbesserung des Drehzahlsignals führt. Die Grundfrequenz bezieht sich allgemein auf die Drehfrequenz der Kurbelwelle der Brennkraftmaschine und/oder der Drehfrequenz des Rotors der elektrischen Maschine.

In einer weiteren bevorzugten Ausführungsform des Verfahrens werden alle Frequenzanteile höherer Ordnung, insbesondere mittels eines Tiefpassfilters, oder Teilbereiche der Frequenzanteile höherer Ordnung, insbesondere mittels eines Bandpassfilters, unterdrückt oder herausgefiltert. Die Verwendung eines Tiefpass- bzw. eines Bandpassfilters, die die fundamentale Drehzahlfrequenz passieren, jedoch die Anteile höherer Ordnung unterdrückt, ist eine besonders einfache Ausgestaltung um das gewünschte Ziel, nämlich eine Unterdrückung der Frequenzanteile höherer Ordnung, insbesondere der höheren harmonischen Frequenzen, zu erreichen.

In einer weiteren bevorzugten Ausführungsform des Verfahrens werden aus dem zeitlichen Verlauf der Drehzahl innerhalb eines Zeitbereichs eine Anzahl zeitlich aufeinander folgender Drehzahlwerte ausgewählt, wobei aus zumindest einer ersten Teilmenge der Drehzahlwerte und einer weiteren Teilmenge der Drehzahlwerte, jeweils ein Mittelwert berechnet und hieraus ein Drehzahltrend bestimmt wird, wobei durch Vergleich von zumindest einem Drehzahlwert, vorzugsweise einer entsprechenden Anzahl an Drehzahlwerten, mit dem zumindest jeweiligen Zeitpunkt korrespondierenden Wert des Drehzahltrends ein Korrekturfaktor berechnet wird, mittels dem eine weiter korrigierte Drehzahl ermittelt wird. Durch die zuvor genannten Maßnahmen, kann das Drehzahlsignal noch exakter ermittelt werden, wobei durch die entsprechende Mittelwertbildung insbesondere Störeinflüsse höherer Ordnung herausgemittelt werden können. Hierbei ist es besonders bevorzugt, dass die Anzahl der für die Mittelwertbildung herangezogenen Drehzahlwerte ein ganzzahliges vielfaches der Phasenzahl η der elektrischen Maschine ist. Dies ist besonders vorteilhaft, um ausreichend Stützstellen für eine Mittelwertbildung zur Verfügung zu stellen. Es versteht sich, dass eine Kombination dieses Verfahrensmerkmale mit den Merkmalen einer Unterdrückung von Frequenzanteilen höherer Ordnung, zu einer noch weiteren Verbesserung des Drehzahlsignals führt.

Des Weiteren ist es bevorzugt die Zeitbereiche in denen der Drehzahltrend, also der anhand der bereits ermittelten Drehzahlwerte zu erwartende Verlauf der Drehzahl, bestimmt wird, innerhalb von Drehzahlverläufen mit möglichst linearem, vorzugsweise im Wesentlichen konstantem Drehzahlverlauf durchzuführen. Dies ist besonders vorteilhaft, da hierdurch in diesen Zeitbereich die Varianz aufgrund einer zu erwartenden geringeren Dynamik im Drehzahlverlauf innerhalb des Drehzahlsignals entsprechend gering ist. Somit lässt sich aufgrund der geringeren Anzahl an Drehzahlwerten, die deutlich vom Mittelwert abweichen, ein Drehzahltrend hoher Güte ermitteln. Hierbei bieten sich die Zeitbereiche an, in denen sich die Brennkraftmaschine im Betriebszustand des Gaswechseltaktes befindet.

Sowohl für die Korrektur des Drehzahlverlaufs mittels frequenzbasiertem Verfahren, als auch bei der Korrektur mittels Drehzahltrendschätzung oder einer Kombination beider Verfahren kann im Anschluss die korrigierte Drehzahl dazu verwendet werden, die Drehwinkelpositionsinformation der Welle zu korrigieren und so eine verbesserte Steuerung der Brennkraftmaschine zu erzielen.

Eine Korrektur kann beispielsweise derart erfolgen, dass zur Berechnung der Drehzahl aus einer gemessenen Zeit zwischen zwei Signalflanken des Drehsignals ein zugehöriger überstrichener Winkel der Welle in dieser Zeit angenommen wird. Durch Fehler im Signal, werden die Signalflanken gegebenenfalls nicht an der angenommenen Wellenposition detektiert, der Winkel und die daraus errechnete Drehzahl sind also fehlerbehaftet. In der korrigierten Drehzahl werden diese Fehler korrigiert, sodass unter Verwendung der gleichen Zeitinformation auf den tatsächlichen Winkel zwischen den Signalflanken zurückgerechnet werden kann und somit auch die Position der Flanke und damit die Drehwinkelposition entsprechend korrigiert werden kann.

In einer weiteren bevorzugten Ausführungsform des Verfahrens wird die Drehgröße, insbesondere die Drehwinkelposition der Welle zur Steuerung der Brennkraftmaschine, insbesondere zur Steuerung der Zündung und/oder der Einspritzung zumindest eines Zylinders der Brennkraftmaschine, verwendet. Eine Erfassung und Verarbeitung der Phasensignale der elektrischen Maschine, insbesondere durch ein Motorsteuergerät kann entsprechend zur Steuerung der Zündung bzw. zur Steuerung des Drehmoments der Brennkraftmaschine in einem Steuergerät der Brennkraftmaschine herangezogen werden. Auch die Ruheposition des Rotors der elektrischen Maschine und damit auch der Kurbelwelle der Brennkraftmaschine ist entsprechend detektierbar. Eine entsprechende Steuerung in einem übergeordneten Steuergerät, insbesondere einem Motorsteuergerät, ist besonders bevorzugt, da dieses ohnehin bereits vorhanden ist und entsprechend auf die Systemressourcen zurückgegriffen werden kann, wodurch die Funktionalitäten zur Erkennung der Drehwinkelposition als auch zur Steuerung der Brennkraftmaschine in einem Steuergerät zusammengefasst werden kann. Hierdurch ergeben sich Synergieeffekte hinsichtlich einer gemeinsamen nutzbaren Regel und Kommunikationsinfrastruktur. Weitere Vorteile ergeben sich auch aufgrund des verwendeten Summensignals für den Datenaustauch mit dem Steuergerät, da hierfür lediglich eine Datenleitung erforderlich ist.

Hierfür weist die verwendete Recheneinheit, die vorzugsweise als Motorsteuergerät für die Brennkraftmaschine ausgebildet ist, eine entsprechend integrierte Schaltung und/oder einen auf einem Speicher gespeichertes Computerprogramm auf, die bzw. das zur Durchführung der zuvor beschriebenen Verfahrensschritte eingerichtet ist, bzw. sind.

Die Implementierung des Verfahrens in Form eines Computerprogramms, das vorzugsweise auf einem Datenträger, insbesondere einem Speicher in Form von Software gespeichert ist, und in der Recheneinheit zur Ausführung des Verfahrens zur Verfügung steht bzw. das Vorsehen einer integrierten Schaltung, insbesondere eines ASIC (anwendungsspezifische integrierte Schaltung), ist vorteilhaft, da diese besonders geringe Kosten verursacht, insbesondere dann, wenn ein ausführendes Steuergerät noch für weitere Aufgaben genutzt wird und daher ohnehin bereits vorhanden ist. Geeignete Datenträger zur Bereitstellung des Computerprogramms sind insbesondere magnetische, optische und elektrische Speicher, wie sie vielfach aus dem Stand der Technik bekannt sind.

Weitere Vorteile und Ausgestaltungen der Erfindung ergeben sich aus der Beschreibung und der beiliegenden Zeichnungen.

Kurze Beschreibung der Zeichnung(en)

Figur 1
zeigt schematisch ein Geberrad mit Sensor, insbesondere zur Drehzahlbestimmung, gemäß dem Stand der Technik;

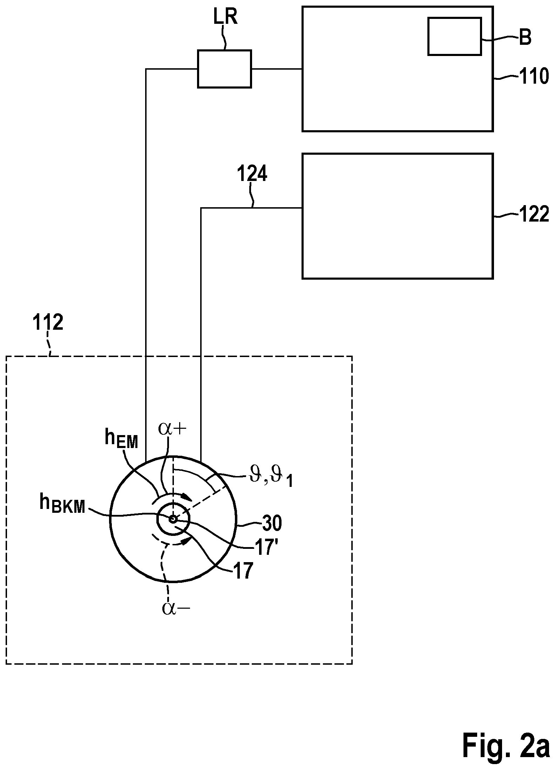

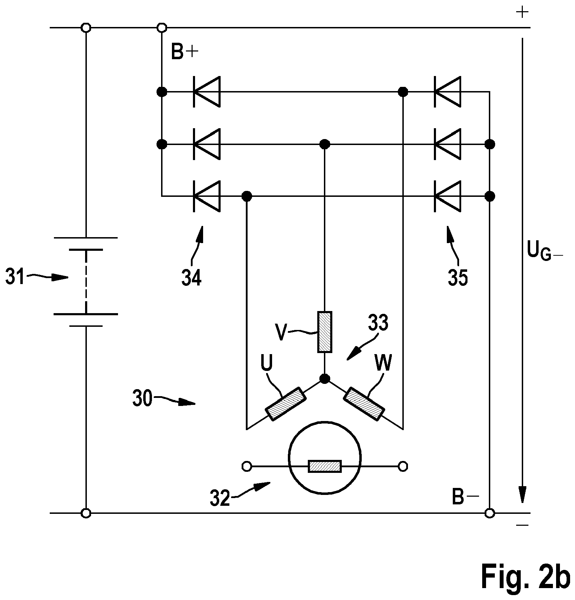

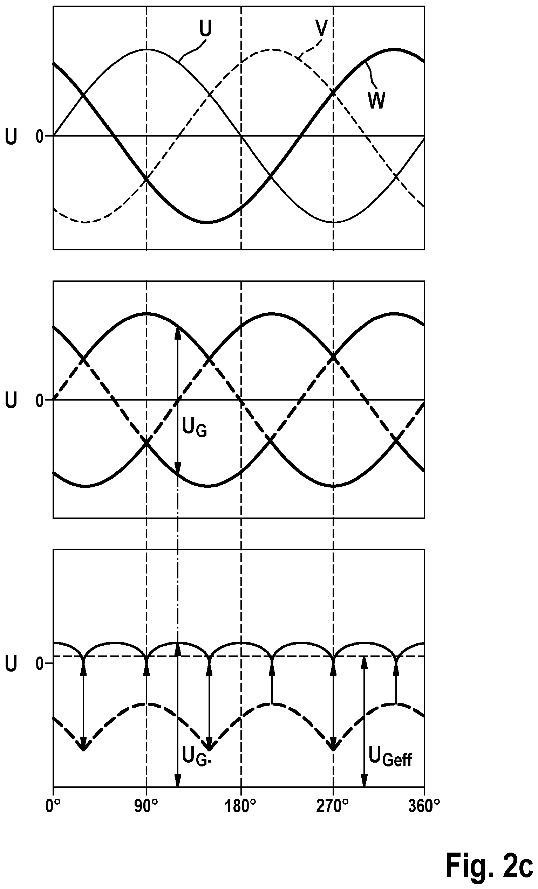

Figuren 2 a bis 2 c
zeigt eine schematische Darstellung einer an eine Brennkraftmaschine gekoppelten elektrischen Maschine (a, b), und die dazugehörigen Signalverläufe (c);

Figur 3
zeigt schematisch eine elektrische Maschine, mit den entsprechenden zugehörigen Phasensignalen;

Figur 4 a und 4 b
zeigt schematisch eine Auswerteschaltung gemäß einer Ausführungsform für eine Phasenspannung (a) sowie ein mit einer Phasenspannung verknüpftes Phasensignal (b);

Figur 5 a bis 5 c
zeigt schematisch eine Auswerteschaltung gemäß einer weiteren Ausführungsform für eine Phasenspannung (a), ein mit einer Phasenspannung verknüpftes Phasensignal (b) sowie typische Signalverläufe an einzelnen Komponenten der Auswerteschaltung (c);

Figur 6 a und 6 b
zeigt aus den Spannungsverläufen erhaltene Phasensignale der Phasen einer dreiphasigen elektrischen Maschine (a) und eine vergrößerte Darstellung dieser Signale (b);

Figur 7 a und 7 b
zeigt schematisch eine Schaltung zur Erzeugung eines Summensignals aus mehreren Phasensignalen (a) sowie den zeitlichen Verlauf der einzelnen Phasensignale und ein Summensignal (b);

Figur 8 a bis 8 d
zeigt schematisch den zeitlichen Verlauf eines Summensignals anhand dem eine Ermittlung der Drehrichtung der Welle erläutert wird (a); zeigt schematisch den zeitlichen Verlauf eines Summensignals anhand dem eine Ermittlung der Drehwinkelposition der Welle, gemäß einer ersten Ausführungsform, erläutert wird (b); zeigt schematisch den zeitlichen Verlauf eines Summensignals anhand dem eine Ermittlung der Drehwinkelposition der Welle, gemäß einer weiteren Ausführungsform, erläutert wird (c); zeigt ein schematisches Ablaufdiagramm zur Erläuterung des Verfahrens, gemäß einer Ausführungsform (d);

Figur 9
zeigt ein Ablaufdiagramm für ein Verfahren zur Drehzahlbestimmung einer Welle;

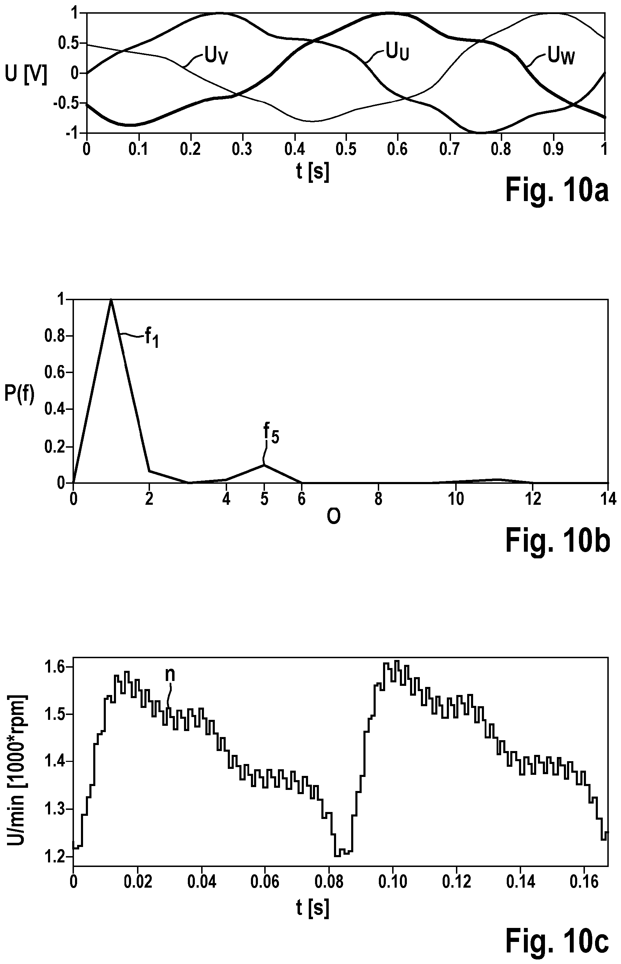

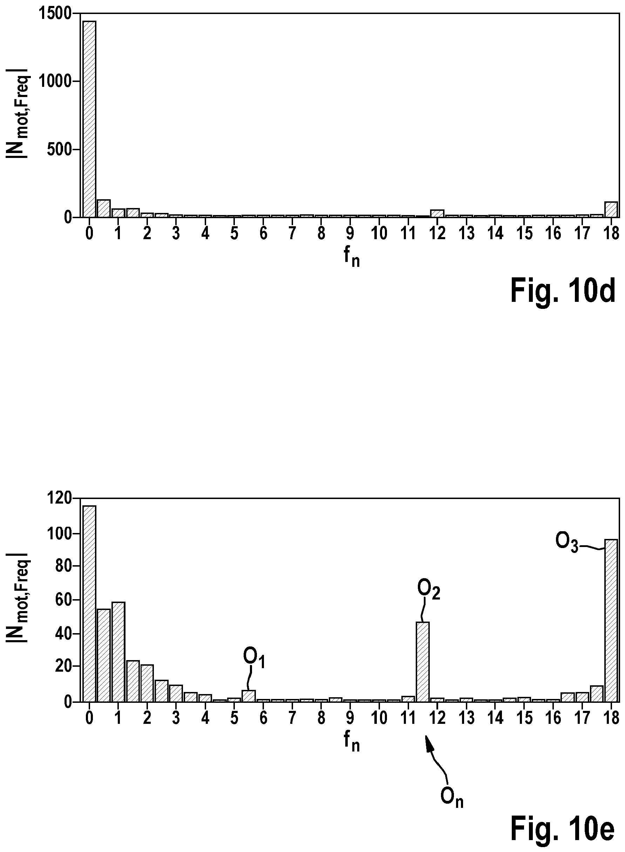

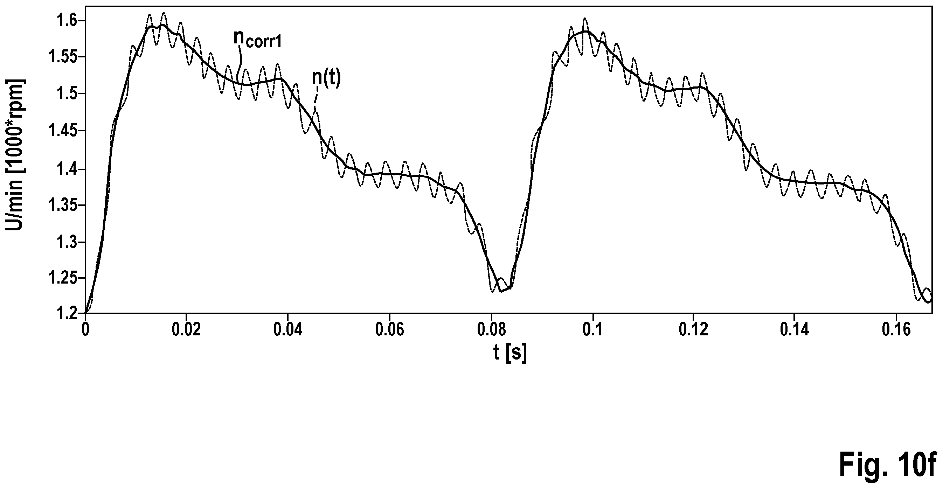

Figur 10 a bis 10 f
zeigt den Verlauf von drei Phasenspannungen (a), eine Darstellung einer Frequenzanalyse nach Amplituden der Phasenspannungen aus (a) über höhere harmonische der Grundfrequenz (b), ein Drehzahlsignal (c) das aus den Phasenspannungen aus (a) ermittelt wurde, eine weitere Darstellung einer Frequenzanalyse nach Amplituden der Phasenspannungen aus (a) über höhere harmonische der Grundfrequenz (d) und in vergrößerter Ansicht (e), und eine Darstellung eines durch Störfaktoren behaftetes Drehzahlsignal und eine entsprechend mittels eines weiteren Verfahrens korrigiertes Drehzahlsignal (f);

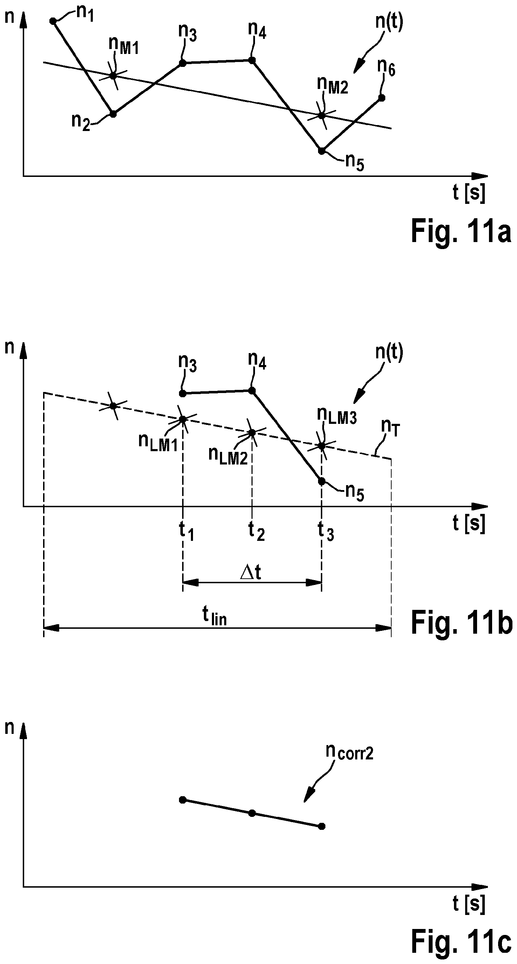

Figur 11 a bis 11 c
zeigt ein durch Drehzahlwerte illustriertes Ablaufdiagramm (a-c) für ein Verfahren zur verbesserten Drehzahlbestimmung einer Welle gemäß einer weiteren Ausführungsform; und

Figur 12
zeigt eine Darstellung eines durch Störfaktoren behaftetes Drehzahlsignal und eine entsprechend mittels eines weiteren Verfahrens korrigiertes Drehzahlsignal.

Ausführungsform(en) der Erfindung

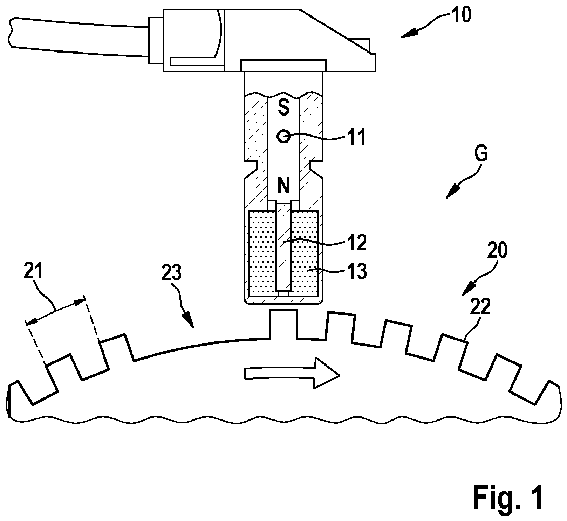

In Figur 1 sind schematisch ein Geberrad 20 und ein zugehöriger induktiver Sensor 10 eines Drehzahlgebers G dargestellt, wie sie im Stand der Technik zur Drehzahlbestimmung bzw. zur näherungsweisen Ermittlung der Drehwinkelposition der Kurbelwelle verwendet werden. Das Geberrad 20 ist dabei fest mit einer Kurbelwelle einer Brennkraftmaschine verbunden und der Sensor 10 ist ortsfest an einer geeigneten Stelle angebracht.

Das Geberrad 20, üblicherweise aus einem ferromagnetischen Material gefertigt, weist Zähne 22 auf, die an der Außenseite mit einem Abstand 21 zwischen zwei Zähnen 22 angeordnet sind. An einer Stelle auf der Außenseite weist das Geberrad 20 eine Lücke 23 in der Länge einer vorbestimmten Anzahl von Zähnen auf. Diese Lücke 23 dient als Bezugsmarke zur Erkennung einer absoluten Position des Geberrads 20.

Der Sensor 10 weist einen Stabmagnet 11 auf, an welchem ein weichmagnetischer Polstift 12 angebracht ist. Der Polstift 12 wiederum ist von einer Induktionsspule 13 umgeben. Bei Rotation des Geberrads laufen abwechselnd Zähne 22 und zwischen jeweils zwei Zähnen liegende Leerräume an der Induktionsspule 13 des Sensors 10 vorbei. Da das Geberrad und somit auch die Zähne 22 aus einem ferromagnetischen Material sind, wird bei der Rotation in der Spule ein Signal induziert, womit zwischen einem Zahn 22 und einem Luftspalt unterschieden werden kann.

Durch Korrelation einer Zeitdifferenz zwischen zwei Zähnen mit einem Winkel, den diese zwei Zähne einschließen, können die Winkelgeschwindigkeit bzw. die Drehzahl und darüber hinaus auch die entsprechende Winkelposition der Kurbelwelle näherungsweise berechnet werden.

An der Lücke 23 weist das induzierte Signal in der Induktionsspule einen anderen Verlauf auf, als bei den ansonsten sich mit Leerräumen abwechselnden Zähnen 22.

In Figur 2a ist eine Brennkraftmaschine 112 abgebildet, an die direkt oder übersetzt gekoppelt eine elektrische Maschine 30 angebunden ist, wobei die elektrische Maschine 30 durch die Kurbelwelle 17' der Brennkraftmaschine 112 angetrieben wird. Somit weist die Drehzahl $n_{Gen}$ der elektrischen Maschine 30 und die Drehzahl $n_{BKM}$ der Kurbelwelle 17' sowie die Winkelposition $\vartheta_1$ des Rotors der elektrischen Maschine 30 und die Drehwinkelposition $\vartheta$ der Kurbelwelle 17' ein festes Verhältnis zueinander auf. Der elektrischen Maschine 30 ist zudem ein Laderegler LR zugeordnet, der die Batterie B innerhalb des Bordnetzes 110, entsprechend der noch verbleibenden Kapazität der Batterie B, mit Energie versorgt.

Des Weiteren ist eine Recheneinheit, insbesondere ein Motorsteuergerät 122 vorgesehen, das Daten über eine Kommunikationsverbindung 124 mit der elektrischen Maschine 30 bzw. mit der Brennkraftmaschine 112 austauscht und dazu eingerichtet ist, die Brennkraftmaschine 112 und die elektrische Maschine 30 entsprechend anzusteuern. Auch externe Sensordaten, wie die eines Sensors 10 zur induktiven Erfassung der Drehzahl $n_{BKM}$ der Brennkraftmaschine 112 bzw. der daran bevorzugt fest gekoppelten elektrischen Maschine 30 ($n_{Gen}$) können ebenfalls in die Kommunikationsverbindung 124 eingebunden sein, wobei auf Basis der von der elektrischen Maschine 30 und/oder der sonstigen Sensordaten des Sensors 10, das Motorsteuergerät 122 Steuersignale zur Steuerung der Brennkraftmaschine 112 an dieselbe übersendet. Die Drehrichtung $\alpha_+$, $\alpha_-$ des Rotors 32 und dessen Welle 17 ist ebenfalls angegeben, wobei $\alpha_+$ eine Vorwärtsdrehung in Vorzugsrichtung der Brennkraftmaschine 112 und $\alpha_-$ eine Rückwärtsdrehung in Gegenrichtung beschreibt. Die Drehwinkelposition 9 der Kurbelwelle 17' bzw. $\vartheta_1$ des Rotors 32 sind ebenfalls angegeben.

In Figur 2b ist die elektrische Maschine 30 nochmals in vergrößerter Form schematisch dargestellt. Die elektrische Maschine 30 weist einen eine Welle 17 aufweisenden Rotor 32 mit einer Erregerwicklung und einem Stator 33 mit Ständerwicklungen U, V, W auf. Es handelt sich daher um eine fremderregte Maschine, wie sie insbesondere bei Kraftfahrzeugen üblich ist. Insbesondere für Krafträder, insbesondere bei Klein- und Leichtkrafträdern, werden jedoch meist Motoren mit Permanentmagneten, d. h. permanenterregte elektrische Maschine eingesetzt. Im Rahmen der Erfindung können grundsätzlich beide Arten von elektrischen Maschinen verwendet werden, wobei insbesondere das erfindungsgemäße Verfahren nicht von der Verwendung der jeweiligen Art der elektrischen Maschine, beispielsweise einer permanenterregten elektrischen Maschine oder einer fremderregten elektrischen Maschine, abhängt.

Beispielhaft ist die elektrische Maschine 30 als Drehstromgenerator ausgebildet, in welcher drei zueinander um 120° phasenverschobenen Phasenspannungssignale induziert werden. Derartige Drehstromlichtmaschinen werden üblicherweise als Generatoren in modernen Kraftfahrzeugen verwendet und sind für die Durchführung eines erfindungsgemäßen Verfahrens geeignet. Im Rahmen der Erfindung können grundsätzlich alle elektrischen Maschinen unabhängig von der Anzahl ihrer Phasen verwendet werden, wobei insbesondere das erfindungsgemäße Verfahren nicht von der Verwendung der jeweiligen Art der elektrischen Maschine abhängt.

Die drei Phasen des Drehstromgenerators 30 sind mit U, V, W bezeichnet. Über das als Plusdioden 34 und Minusdioden 35 ausgebildete Gleichrichtelement, werden die an den Phasen abfallenden Spannungen gleichgerichtet. Zwischen den Polen B+ und B- liegt somit eine Generatorspannung $U_G$, bei welcher der Minuspol auf Masse liegt, an. Von einem derartigen Drehstromgenerator 30 werden beispielsweise eine Batterie B bzw. andere Verbraucher innerhalb des Bordnetzes 110 versorgt.

In Figur 2c sind drei Diagramme dargestellt, die die zugehörigen Spannungsverläufe gegenüber dem Drehwinkel des Rotors 32 der elektrischen Maschine 30 zeigen. Im oberen Diagramm sind die Spannungsverläufe an den Phasen U, V, W eingetragen. Allgemein versteht sich, dass die in diesem Diagramm und in den nachfolgenden Diagrammen angegebenen Zahlen und Wertebereiche lediglich exemplarisch sind, und daher die Erfindung im Grundsatz nicht beschränken.

Im mittleren Diagramm ist die Generatorspannung $U_G$, die durch die Hüllkurven der positiven und negativen Halbwellen der Spannungsverläufe U, V, W gebildet wird, gezeigt.

Im unteren Diagramm ist schließlich die gleichgerichtete Generatorspannung $U_{G-}$ (vgl. Figur 2a), zusammen mit dem Effektivwert $U_{Geff}$ dieser Generatorspannung $U_{G-}$, die zwischen B+ und B- anliegen, gezeigt.

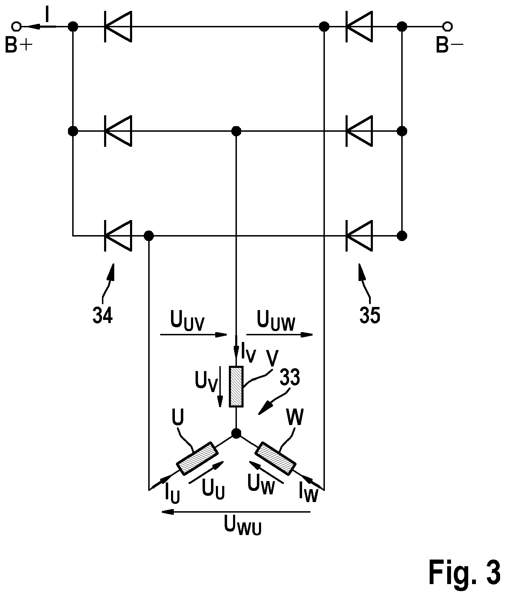

In Figur 3 ist schematisch der Stator 33 mit den Phasen U, V, W, sowie den Plusdioden 34 und Minusdioden 35 aus Figur 2b gezeigt. Grundsätzlich versteht sich, dass die hier abgebildeten Gleichrichterelemente in Form von Plusdioden 34 und Minusdioden 35 im Falle eines aktiven Gleichrichters auch als Transistoren, insbesondere MOSFETs (Metall-Oxid-Halbleiter-Feldeffekttransistor), ausgebildet sein können (nicht dargestellt). Zudem ist die im Folgenden benutzte Nomenklatur der auftretenden Spannungen und Ströme dargestellt.

$U_U$, $U_V$, $U_W$ bezeichnen alternativ die Phasenspannungen der zugehörigen Phasen U, V, W, wie sie zwischen einem Außenleiter und dem Sternpunkt des Stators 33 abfallen. $U_{UV}$, $U_{VW}$, $U_{WU}$, bezeichnen die Spannungen zwischen zwei Phasen bzw. deren zugehörigen Außenleitern.

$I_U$, $I_V$, $I_W$ bezeichnen die Phasenströme vom jeweiligen Außenleiter einer Phase U, V, W zum Sternpunkt. I bezeichnet den Gesamtstrom aller Phasen nach der Gleichrichtung.

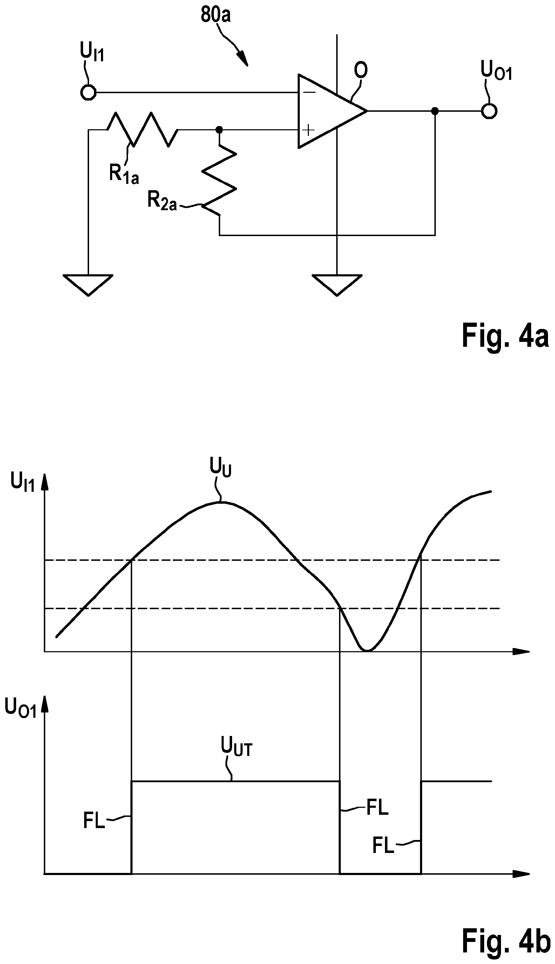

Figur 4 zeigt schematisch eine Auswerteschaltung 80a in Form eines Schmitt-Triggers gemäß einer ersten Ausführungsform für eine Phasenspannung $U_U$, sowie die Phasenspannung $U_U$ (oberes Diagramm) und die mittels der Auswerteschaltung 80a erhaltene, getriggerte Phasenspannung Uut einer Phase U einer elektrischen Maschine 30. In Figur 4a ist ein sogenannter Schmitt-Trigger 80a schematisch dargestellt. Mittels einer derartigen Auswerteschaltung 80a wird anhand eines Eingangssignals $U_{I1}$, das vorliegend der Phasenspannung Uu entspricht, und ein anhand der Auswerteschaltung 80a gewonnenes Ausgangssignal $U_{O1}$, wie es anhand der getriggerten Phasenspannung $U_{Ut}$ im unteren Diagramm von Figur 4b) dargestellt ist, erzeugt. Die im oberen Diagramm angegebenen gestrichelten horizontalen Linien (vgl. Figur 4a) geben entsprechend die Schaltschwellen der Auswerteschaltung 80a an.

Die Widerstände $R_{1a}$ und $R_{2a}$ im Rückkopplungszweig des Operationsverstärkers O führen zu diesen unterschiedlichen Umschaltschwellen des Ausgangs in Abhängigkeit der momentanen Ausgangsspannung $U_{O1}$. Durch die Vorgabe der jeweiligen Schaltschwellen kann somit das im Signalverlauf dargestellte Verhalten realisiert und sichergestellt werden, dass das Signalrauschen um den Schallpunkt nicht zu wechselnden Ausgangspegeln des Operationsverstärkers O führt. Mittels dieser Auswerteschaltung kann ein entsprechend einfach auswertbares getriggertes Phasensignal $U_{Ut}$ generiert werden, anhand dessen steilen Flanken und der zeitlichen Abstände der jeweils benachbarten Flanken FL zur Drehzahlbestimmung der elektrischen Maschine 30 herangezogen werden können.

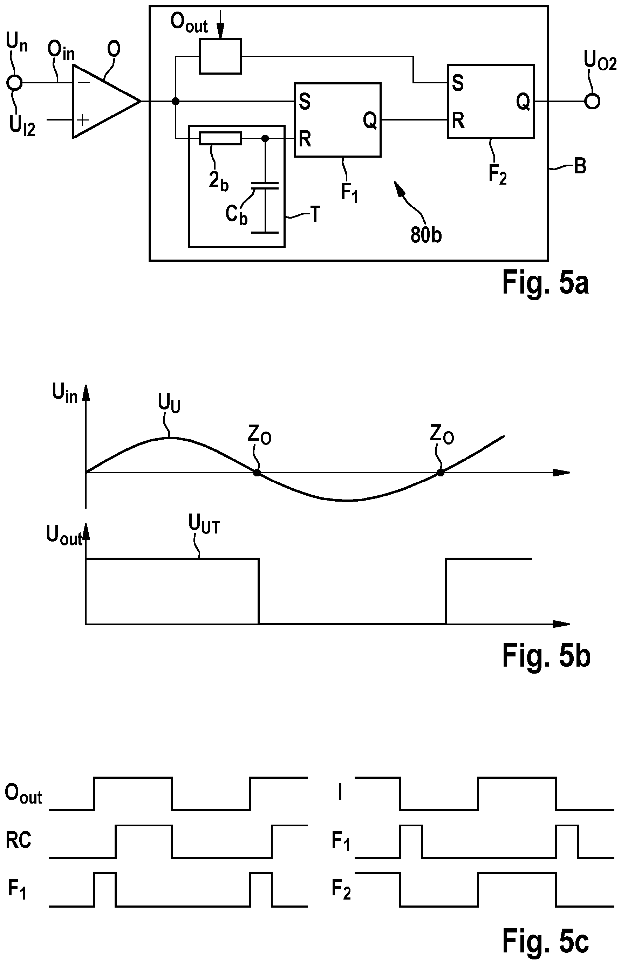

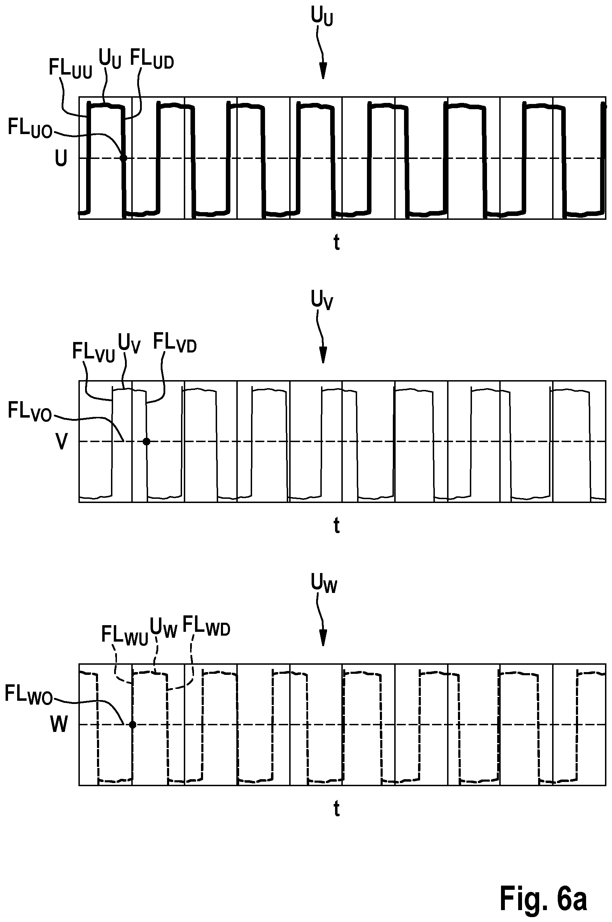

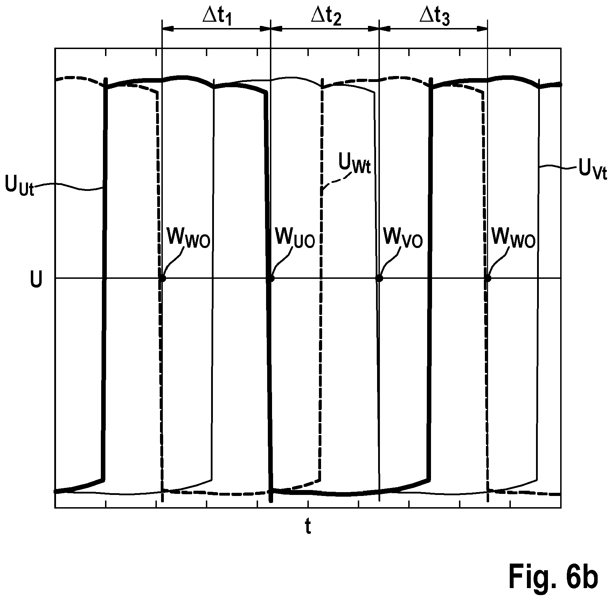

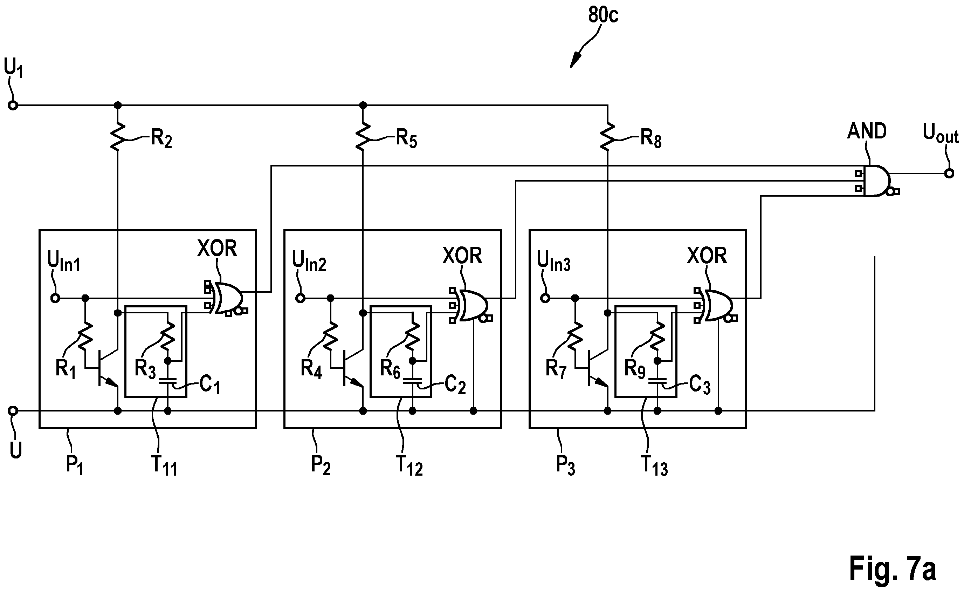

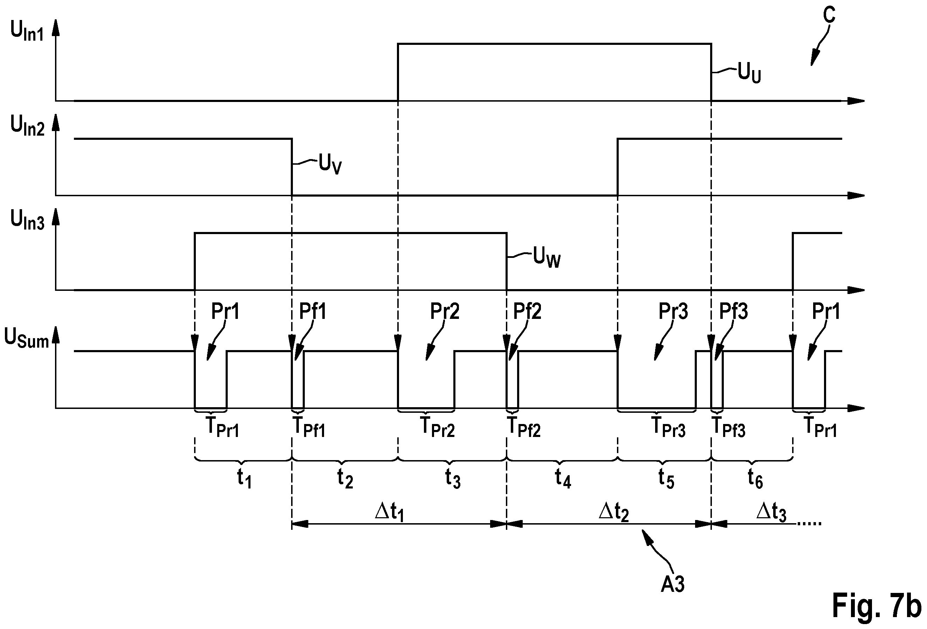

In Figur 5 ist eine weitere Ausführungsform einer Auswerteschaltung 80b gezeigt, mittels der anhand eines Eingangssignals $U_{I2}$, das vorliegend exemplarisch der Phasenspannung $U_U$ entspricht, ein Ausgangssignal $U_{O2}$ erzeugt wird, das vorliegend der getriggerten Phasenspannung $U_{Ut}$ entspricht. Die Phasenspannung $U_{Ut}$ ist im unteren Diagramm von Figur 5b) dargestellt. Es versteht sich, dass am Eingang $U_{I2}$ auch andere Phasenspannungen Uu, Uv, Uw anliegen und können, die zu einer Ausgabe am Ausgang $U_{O2}$ bzw. $U_{O2U}$, $U_{O2V}$, $U_{O2W}$ von getriggerten Phasenspannungen $U_{Ut}$, $U_{Vt}$, $U_{Wt}$ (vgl. hierzu insbesondere Figuren 6 und 7) führen.

Die Auswerteschaltung 80b weist eine Blockiervorrichtung B zur Rauschunterdrückung mittels zeitlicher Filterung des jeweiligen Phasensignals Uu, Uv, Uw auf. Die Blockiervorrichtung B ist hierbei zumindest einem Operationsverstärker O nachgelagert, an dessen Eingang $O_{in}$ das Phasensignal Uu, Uv, Uw anliegt. Die Blockiervorrichtung B weist ein Totzeitglied T, dessen einstellbare Totzeit die Zeitkonstante für die zeitliche Filterung definiert, zwei Schalter $F_1$ und $F_2$ sowie eine Invertierstufe I auf. Das Totzeitglied T weist einen Widerstand $R_{1c}$ und einen Kondensator $C_{1c}$ auf, der mit dem über den Ausgang des Operationsverstärkers O fließenden Strom geladen wird. Nach dem Umschalten des Ausgangs $U_{o2}$ der Auswerteschaltung, wird durch die Kombination aus Totzeitglied T und einem ersten Schalter $F_1$, der vorzugsweise in Form eines R/S-Flipflops ausgebildet ist, ein Pulssignal am Ausgang des Schalters $F_1$ erzeugt, dessen Pulse eine positive Ausgangsspannung (High-Level, High) gegenüber der Ruhespannung (Low-Level, Low) aufweisen. Die aufsteigenden Flanken des Pulssignals treten dabei zeitgleich mit der aufsteigenden Flanke des Signals $O_{out}$ am Ausgang des Operationsverstärkers O auf. Die nachfolgende abfallende Flanke der Pulse tritt nach der Totzeit des Totzeitglieds T auf. Parallel wird durch eine Invertierstufe I ein invertiertes Signal des Ausgangssignals $O_{out}$ des Operationsverstärkers O generiert. Dieses invertierte Signal wird auf den Set-Eingang S eines zweiten Schalter $F_2$, der vorzugsweise in Form eines R/S-Flipflops ausgebildet ist, gegeben und das Pulssignal auf den Reset-Eingang R. Der Schalter $F_2$ gibt dabei die erste Signalflanke des invertierten Signals an den Ausgang $U_{o2}$ durch und verhindert anschließend ein erneutes Umschalten des Ausgangs solange ein High-Level des Pulssignals anliegt oder das Ausgangssignal selber bereits High-Level aufweist.

Damit wird Rauschen im Bereich abfallender Flanken am Eingang $O_{in}$ des Operationsverstärkers O dadurch am Ausgang $U_{o2}$ unterdrückt, dass der Schalter $F_2$ den Ausgang nicht erneut umschalten kann, solange kein High-Level am Reset-Eingang R vorliegt. Für aufsteigende Flanken am Eingang $O_{in}$ des Operationsverstärkers liegt am Reset-Eingang R des Schalters $F_2$ ein Puls des Pulssignals des Schalters $F_1$ vor. Dieses führt dazu, dass der Schalter $F_2$ den Ausgang $U_{o2}$ auf Low setzt. Ein mögliches Rauschen im Bereich der aufsteigenden Flanken am Eingang $O_{in}$ wird dadurch unterdrückt, dass der Schalter $F_2$ den Ausgang $U_{o2}$ nicht erneut auf High setzen kann, solange ein High-Level am Reset-Eingang R anliegt. Während der Pulslänge wird somit kein Umschalten des Ausgangs $U_{o2}$ ermöglicht und mögliches Rauschen unterdrückt. Die charakteristische Zeitkonstante für diese Rauschunterdrückung wird durch eine entsprechende Wahl des Widerstands $R_{1c}$ und des Kondensators $C_{1c}$ bewirkt.

Durch die Verwendung einer Blockiervorrichtung B können die entsprechenden Rauscheinflüsse, wie sie in Figur 5b im oberen Diagramm um die Nulllinie im Zeitbereich bzw. Zeitdauer $Z_0$ dargestellt sind (jeweils durch Kreise gekennzeichnet), unterdrückt werden. Dies führt zu einer verbesserten Signalgüte des getriggerten Phasensignals $U_{Ut}$,

$U_{Vt}$, $U_{Wt}$. In Figur 5 c) sind typische Signalverläufe am Ausgang des Operationsverstärkers O, am Widerstand R oder Kondensator C, an der Invertierstufe I oder den Flip-Flops $F_1$ bzw. $F_2$ dargestellt.

Vorteilhaft an dieser Schaltung gegenüber einer Schmitt-Trigger-Lösung (vgl. Fig. 3) ist, dass ein deutlich exakterer Nulldurchgang der Eingangssignale in Form von Phasensignalen Uu, Uv, Uw, detektiert wird, wobei bei einem Schmitt-Trigger 80a stets eine Schaltschwelle > 0 für das Phasensignal erforderlich ist (vgl. Fig. 3). Hierdurch können charakteristische Werte $W_{U0}$ des Phasensignals $U_u$ oder bei Vorliegen mehrerer Phasensignale eine entsprechend parallele Anordnung dieser Triggerschaltungen genutzt werden. Diese charakteristischen Werte $W_{U0}$, $W_{V0}$, $W_{W0}$ können insbesondere zur Bestimmung der Drehzahl n oder der Drehwinkellage des Rotors 32 der elektrischen Maschine 30 herangezogen werden.

Die Rauschunterdrückung wird hier nicht durch unterschiedliche Schwellwerte realisiert, sondern durch eine zeitliche Filterung mittels Totzeitglied. Dieses verhindert in der ersten (kurzen) Zeit nach dem Umschalten des Ausgangs $U_{o2}$ auf Grund eines Nulldurchgangs am Eingang, dass der Ausgang $U_{o2}$ direkt wieder (insbesondere wegen Rauschen) zurückgeschaltet wird. Ein erneutes Umschalten des Ausgangs $U_{o2}$ kann erst nach Ende der Totzeit und einem nachfolgend auftretenden Nulldurchgang ausgelöst werden, wobei nur dann die dem Operationsverstärker O und dem Totzeitglied T nachgelagerten Flip-Flop Schalter $F_1$ und/oder $F_2$ beschaltet werden und das Ausgangssignal $U_{O2}$ in Form des getriggerten Phasensignals $U_{Ut}$ ausgegeben wird.

In Figur 6a sind nun drei Phasenspannungssignale Uu, Uv, Uw mit Potentialbezug auf B- in drei Diagrammen gegenüber der Zeit dargestellt, wie sie in einem Generator mit einem Außenpolläufer mit sechs Permanentmagneten auftreten. Diese Darstellung einer elektrischen Maschine 30, mit einer dreiphasigen Statorwicklung 33 ist lediglich beispielhaft zu sehen, wobei grundsätzlich, ohne Beschränkung der Allgemeinheit, das erfindungsgemäße Verfahren auch auf einem Generator mit einer entsprechend bedarfsgerechten Anzahl an Phasen oder Permanentmagneten oder Erreger-Spulen ausführbar ist. Ebenfalls können statt einer Stern-Verschaltung der Stator-Spulen auch eine Dreiecks-Verschaltung oder weitere Verschaltungsweisen gewählt werden.

Bei einer elektrischen Maschine 30 mit Stromabgabe, ist der Verlauf der Phasenspannungen $U_U$, $U_V$, $U_W$ in erster Näherung rechteckförmig. Dies erklärt sich insbesondere dadurch, dass durch die Generatorspannung entweder die Plus- oder die Minusdioden in Flussrichtung leiten, und daher entweder in etwa 15-16 Volt (Batterieladespannung bei 12V Bleisäure-Akkumulator und Spannung an Plusdioden), oder Minus 0,7-1 Volt (Spannung an Minusdioden), gemessen wird. Bezugspotential der Messung ist jeweils Masse. Es können auch andere Bezugspotentiale wie zum Beispiel der Sternpunkt des Stators gewählt werden. Diese ergeben abweichende Signalverläufe, ändern jedoch nicht die auswertbaren Informationen, deren Gewinnung und Auswertung.

Grundsätzlich können die Phasensignale (Uu, Uv, Uw, $I_U$, Iv, Iw) auf verschiedene Weise gewonnen werden. Möglich ist beispielsweise eine Ermittlung der Phasenspannungen gegeneinander ($U_{UV}$, $U_{UW}$, $U_{WU}$), eine Ermittlung der Phasenspannungen über die Dioden eines angeschlossenen Gleichrichters gegen dessen Ausgangsklemmen (B+, B-), sofern der Stator der elektrischen Maschine in Sternschaltung mit abgreifbarem Sternpunkt ist, eine Betrachtung der Ausgangsspannung der Stränge gegen den Sternpunkt (Uu, Uv, Uw) oder eine vergleichbare Auswertung der Phasenströme.

In Figur 6b sind mittels einer Triggerschaltung 80a, b (vgl. hierzu Figuren 4 oder 5) bearbeitete Phasenspannungen $U_{Ut}$, $U_{Vt}$, $U_{Wt}$ aus Figur 6a in einem Diagramm zusammen aufgetragen. Hierbei ist deutlich der gleichmäßige Phasenversatz zu erkennen. Die Begrifflichkeiten der Phasenspannungen Uu, Uv, Uw bzw. der bearbeitete Phasenspannungen $U_{Ut}$, $U_{Vt}$, $U_{Wt}$ werden nachfolgend teilweise synonym verwendet, da die bearbeitete Phasenspannungen Uut, Uvt, Uwt unmittelbar aus den Phasenspannungen Uu, Uv, Uw hervorgehen.

Während einer vollen Umdrehung des Rotors 32 der elektrischen Maschine 30, werden die Spannungssignale durch sechs Magnete (insbesondere Permanentmagnete), die sogenannten Polpaare, sechs Mal wiederholt. Dementsprechend treten pro Phase, d. h. pro Phasenspannung Uu, Uv, Uw pro Umdrehung des Rotors 32 sechs fallende Flanken $FL_D$ und sechs steigende Flanken FLu (für die jeweiligen Phasen FLuu, $FL_{VU}$, $FL_{WU}$ und $FL_{UD}$, $FL_{VD}$, $FL_{WD}$) auf.

Diese Flanken legen einen Winkelabschnitt fest, nämlich genau den Winkelabschnitt, der durch die Magnete entlang des radialen Umfangs des Stators abgedeckt ist. Demnach lässt sich bei Erkennen der jeweiligen Flanken FLu, bzw. $FL_D$, bei Kenntnis eines absoluten Bezugspunkts pro Umlauf, der beispielsweise anhand eines Referenzmagneten mit von den sonstigen Magneten abweichender Charakteristik der Phasenspannung Uu, Uv, Uw bzw. dem getriggerten Verlauf der Phasenspannungen $U_{Ut}$, $U_{Vt}$, $U_{Wt}$ gekennzeichnet ist, ermittelt werden.

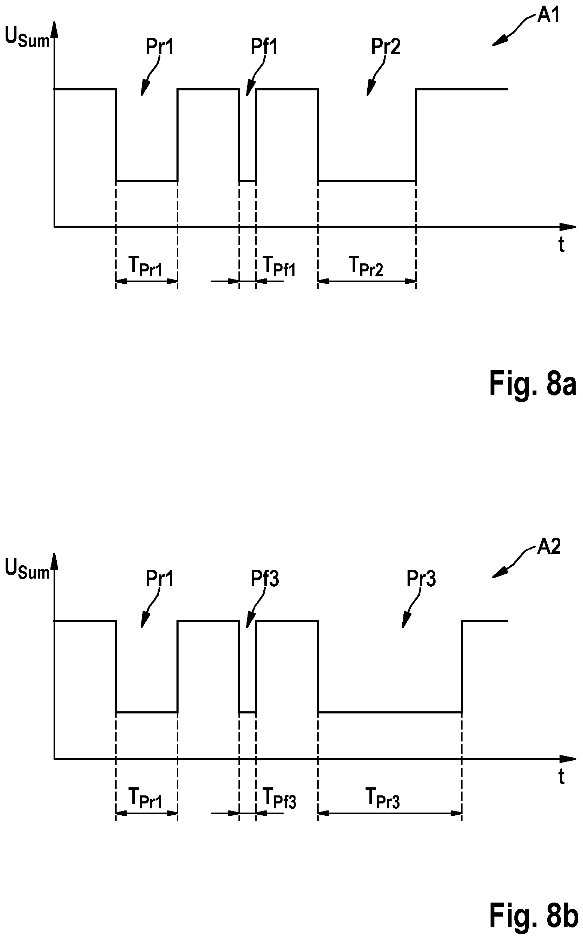

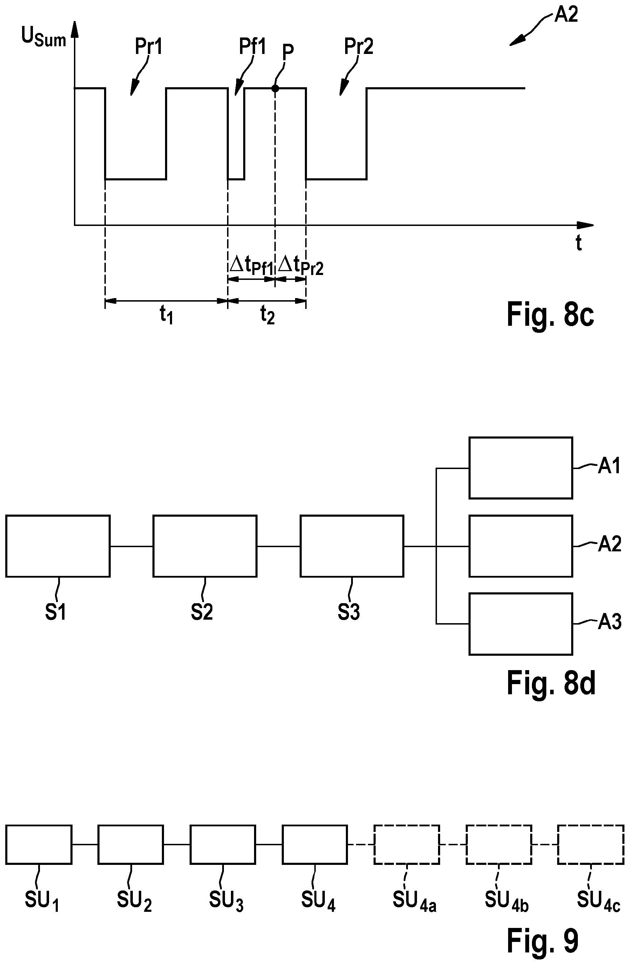

Mit geeigneten Mitteln können nun sowohl die fallenden Flanken $FL_D$ als auch die steigenden Flanken $FL_U$ bzw. Nulldurchgänge der Phasenspannung erkannt werden. Beispielsweise kann für jede Phasenspannung mittels der in Figur 4 oder 5 gezeigten Schaltungen der getriggerte Verlauf der Phasenspannungen $U_{Ut}$, $U_{Vt}$, $U_{Wt}$ in Form eines TTL-Signals generiert und an ein Steuergerät, insbesondere an das Motorsteuergerät 122, übermittelt werden. Die benötigten Trigger (vgl. Figuren 4 oder 5) können entweder im Steuergerät oder in der Steuerelektronik, beispielsweise einem Steuergerät, einem Regler für die Batteriespannung und/oder im Fall eines aktiven Gleichrichters, im jeweiligen Generatorregler integriert oder diesen auch extern zugeordnet sein. Die einzelnen TTL-Signale können insbesondere für den Fall der Verwendung eines Steuergeräts, insbesondere eines Motorsteuergeräts 122 (vgl. Figur 2a), als Summensignal $U_{Sum}$ (vgl. Figuren 7 und 8) zusammengefasst und vorzugsweise über eine Leitung, oder durch eine vorgelagerte Kombinationselektronik oder in anderer Form geeignet zusammengefasst, über nur eine Datenleitung 124 (vgl. Figur 2a) übermittelt werden. Das Summensignal $U_{Sum}$ entspricht hierbei dem Ausgangssignal $U_{Out}$ der in Figur 7 gezeigten Schaltung 80c.

In Figur 6b sind den Enden der jeweiligen fallenden Flanken der Phasenspannung $U_U$, $U_V$, $U_W$ jeweils Werte Wu, Wv, Ww zugeordnet, die auch als $W_{Ud}$, $W_{Vd}$, $W_{Wd}$ bezeichnet werden. Gleichermaßen können auch den steigenden Flanken FLu entsprechende Werte $W_{Uu}$, $W_{Vu}$, $W_{Wu}$ zugeordnet werden. Auch den Nulldurchgängen der Phasenspannungen können entsprechende Werte $W_{U0}$, $W_{V0}$, $W_{W0}$ zugeordnet sein. Diese Werte können zur Erkennung der Drehzahl n des Rotors 32 bzw. der hieran gekoppelten Kurbelwelle 17' dienen. Auch eine Erkennung der Drehwinkellage $\alpha_1$ des Rotors 32 anhand der Plateaubereiche der Phasensignale oder anderen Bereichen dazwischen ist möglich. Die Werte dienen dazu, anhand von Zeitdifferenzen $\Delta t_1$, $\Delta t_2$, $\Delta t_3$, die Drehzahl der elektrischen Maschine 30 zu ermitteln. Die Verwendung einer entsprechenden Triggerschaltung 80a, 80b (vgl. Figuren 4 und 5), generiert aus dem Phasensignal das getriggerte Phasensignal $U_{Ut}$, $U_{Vt}$, $U_{Wt}$, wobei die jeweiligen Flanken den Auftrittszeitpunkt der entsprechenden Werte Wu, Wv, Ww, $W_{U0}$, $W_{V0}$, $W_{W0}$ markieren.

Hierbei treten bei einer gleichmäßigen Anordnung der sechs Permanentmagnete in der elektrischen Maschine 30, insgesamt 18 fallende Flanken $FL_d$ und somit 18 zugehörige Werte pro Umdrehung in jeweils gleichen Abständen zueinander auf. Während eine Zeitdifferenz $\Delta t_1$, $\Delta t_2$, oder $\Delta t_3$ wird somit ein Winkel $360°/18 = 20°$ überstrichen. Wie bereits eingangs erwähnt, kann dies auch zur Erkennung der Drehrichtung $\alpha_+$, $\alpha_-$ des Rotors 32 herangezogen werden, wobei die beispielhaft ermittelten 20° das detektierbare Winkelinkrement darstellt. Zudem lässt sich hieraus auch die Winkelgeschwindigkeit $\omega_i$ ermitteln. Diese ergibt sich aus $\omega_i = 20°/\Delta t_i$ und die dazugehörige Drehzahl $n_i$ aus $n_i = (\omega_i/360° \cdot 60s/min$ in Umdrehungen pro Minute.

Es versteht sich grundsätzlich, dass alternativ zu den fallenden Flanken $FL_D$ auch die steigenden Flanken FLu der jeweiligen Phasen U, V, W zur Ermittlung der Drehrichtung $\alpha_+$, $\alpha_-$ des Rotors 32 als auch zur Ermittlung der Momentandrehzahl $n_{Gen}$ der elektrischen Maschine 30 verwendbar sind. Durch die doppelte Anzahl an Werten pro Umdrehung, ergibt sich dementsprechend eine höhere Auflösung, sowohl der Drehrichtung $\alpha_+$, $\alpha_-$ des Rotors 32, als auch der Drehzahl $n_{Gen}$. Zudem können die Flanken der Phasen auf vielfältige weitere Art und Weise ausgewertet werden, beispielsweise durch die zeitlichen Abstände der steigenden Flanken FLu und fallenden Flanken $FL_D$ jeweils der gleichen Phasen oder von den jeweiligen Phasen zueinander oder durch den zeitlichen Abstand von steigenden Flanken FLu bzw. fallenden Flanken $FL_D$ der gleichen Phase, oder aller Phasen zusammen.

Neben den aufsteigenden Flanken FLu und abfallenden Flanken $FL_D$ können für die Ermittlung der Drehzahl $n_{Gen}$ einer Welle 17, auch die Nulldurchgänge $W_{U0}$, $W_{V0}$, $W_{W0}$ der Phasensignale Uu, Uv, Uw herangezogen werden.

In den Figuren 7a und b ist eine Schaltung 80c zum Zusammenfassen mehrerer Eingangssignale $U_{In1}$, $U_{In2}$ und $U_{In3}$ zu einem Ausgangssignal $U_{Out}$ gezeigt. Die Eingangssignale $U_{In1}$ bis $U_{In3}$ können beispielsweise mit den jeweiligen Phasensignalen Uu, Uv, und Uw assoziiert sein. Grundsätzlich ist die Anwendung nicht auf drei Eingangssignale beschränkt. Bevorzugt sind als Eingangssignale $U_{In1}$ bis $U_{In3}$ jedoch die Ausgangssignale $U_{o1}$ bzw. $U_{o2}$ der in Figur 4 oder 5 gezeigten Trigger-Schaltungen 80a, 80b, beziehungsweise die Ausgangssignale anderer Trigger-Schaltungen, die die Phasensignale einer elektrischen Maschine in geeigneter Form vorverarbeiten. Die sich mittels der Trigger-Schaltungen 80a, 80b ergebenden Verläufe bei einem jeweiligen Phasensignal als Eingangssignal der Trigger-Schaltung 80a, 80b sind in Figur 7b als Eingangssignale $U_{In1}$, $U_{In2}$ und $U_{In3}$ dargestellt. Vorliegend weist die Schaltung 2 Bezugspotentiale U+ und U- auf. Grundsätzlich kann jedoch die Schaltungsanordnung auch derart ausgebildet sein, dass diese lediglich ein festes Bezugspotential aufweist.

Den Eingangssignalen $U_{In1}$ bis $U_{In3}$ ist jeweils eine eigene Pulsformeinheit $P_1$ bis $P_3$ zugeordnet, die dazu eingerichtet sind, jeweils die aufsteigenden Flanken bzw. abfallenden Flanken des Eingangssignals in entsprechende Pulse $P_{f1}$, $P_{f2}$, $P_{f3}$, $P_{r1}$, $P_{r2}$, $P_{r3}$ (vergleiche Figur 7b) zu übersetzen. Die Ausgänge der jeweiligen Pulsformeinheiten $P_1$, $P_2$, $P_3$ werden durch eine nachgelagerte Schaltung zur Verknüpfung der einzelnen Signale $U_{In1}$ bis $U_{In3}$ zu einem gemeinsamen Signal $U_{Sum}$ zusammengefasst und am Ausgang $U_{out}$ bereitgestellt. Für die Verknüpfung kann beispielsweise wie dargestellt ein AND-Glied/Und-Glied verwendet werden. Aber auch andere geeignete Verknüpfungsmöglichkeiten, beispielsweise mittels Transistoren (verschiedene Typen, beispielsweise MOSFETs oder Bipolar-Transistoren) oder Operationsverstärkern lassen sich hierfür verwenden.

Eine mögliche Realisierungsform der Pulsformeinheiten $P_1$ bis $P_3$ weist jeweils mehrere Bauteile, insbesondere einen Kondensator, zumindest zwei Widerstände, einen Transistor (verschiedene Typen möglich, neben den abgebildeten Bipolar-Transistoren können beispielsweise auch MOSFETs oder andere Transistor-Arten verwendet werden) und jeweils ein Xor-Gatter auf. Die mit den aufsteigenden und absteigenden Flanken aus dem Eingangssignal $U_{In1}$ bis $U_{In3}$ assoziierten Pulse $P_{f1}$, $P_{f2}$, $P_{f3}$, $P_{r1}$, $P_{r2}$, $P_{r3}$ bzw. deren charakteristischen Eigenschaften, wie zum Beispiel die Pulslänge oder Pulsbreite $T_{Pf1}$, $T_{Pf2}$, $T_{Pf3}$, $T_{Pr1}$, $T_{Pr2}$, $T_{Pr3}$ können durch die Wahl der jeweiligen Bauteile in der jeweiligen Pulsformeinheit $P_1$, bis $P_3$ entsprechend eingestellt werden.

Hierbei bildet zum Beispiel der Kondensator C1 und der Widerstand R3 in der Einheit P1 ein erstes Totzeitglied $T_{11}$, der Kondensator C2 und der Widerstand R6 ein zweites Totzeitglied T12 in der Pulsformeinheit P2 und der Kondensator C3 und der Widerstand R9 ein weiteres Totzeitglied $T_{13}$ in der Pulsformeinheit P3. Die Pulsbreiten $T_{Pf1}$, $T_{Pf2}$, $T_{Pf3}$, $T_{Pr1}$, $T_{Pr2}$, $T_{Pr3}$, der Pulse $P_{f1}$, $P_{f2}$, $P_{f3}$, $P_{r1}$, $P_{r2}$, $P_{r3}$ werden vorwiegend durch die Dimensionierung der Totzeitglieder $T_{11}$, $T_{12}$, $T_{13}$, insbesondere durch die Dimensionierung der Widerstände R3, R6 und R9 und/oder der Kapazitäten C1, C2 und C3 entsprechend festgelegt. Hierdurch können, wie in Figur 7b zu erkennen ist, die Pulse $P_{f1}$, Pf2, $P_{f3}$, $P_{r1}$, $P_{r2}$, $P_{r3}$ kodiert werden.

Hierbei erhalten alle Flanken der Eingangssignale $U_{In1}$ bis $U_{In3}$ einen entsprechenden Puls $P_{f1}$, $P_{f2}$, $P_{f3}$, $P_{r1}$, $P_{r2}$, $P_{r3}$ mit zugehöriger unterschiedlicher Pulsweite $T_{Pf1}$, $T_{Pf2}$, $T_{Pf3}$, $T_{Pr1}$, $T_{Pr2}$, $T_{Pr3}$. So erhält zum Beispiel der aufsteigende Puls des Eingangssignals $U_{In3}$ den Puls $P_{r1}$ mit der Pulsbreite $T_{pr1}$, die aufsteigende Flanke des Eingangssignals $U_{In1}$ erhält den Puls $P_{r2}$ mit Pulsbreite $T_{Pr2}$ und die absteigende Flanke des Eingangssignals $U_{In2}$ erhält den Puls $P_{f1}$ mit Pulsbreite $T_{Pf1}$, wobei die Pulsbreiten der jeweiligen Pulse eine unterschiedliche Breite aufweisen (vergleiche Figur 7b).

Somit markieren die fallenden Flanken der Pulse $P_{f1}$, $P_{f2}$, $P_{f3}$, $P_{r1}$, $P_{r2}$ und $P_{r3}$ die exakte zeitliche Position der jeweiligen Flanken aus den Eingangssignalen $U_{In1}$ bis $U_{In3}$. Die zeitlichen Abstände $T_{Pf1}$, $T_{Pf2}$, $T_{Pf3}$, $T_{Pr1}$, $T_{Pr2}$, und $T_{Pr3}$ zu den nachfolgenden steigenden Flanken des kodierten Signals beinhalten die Information darüber, welche Richtung der Nulldurchgang des jeweiligen Eingangssignals, d.h. ob fallende oder steigende Flanke des jeweiligen Signals hat und zu welcher Phase dieser Nulldurchgang zuzuordnen ist. Wie bereits erwähnt, werden alle entsprechenden Flanken im Eingangssignal, die entsprechend auch mit Nulldurchgängen assoziiert sein können, eindeutig mit einem entsprechenden Puls kodiert.

Grundsätzlich gilt die Randbedingung, dass die maximal verwendbare Pulslänge der jeweiligen Pulse sich aus der kürzest möglichen Zeit zwischen zwei aufeinanderfolgenden Nulldurchgängen und damit aus der maximalen Drehzahl der elektrischen Maschine 30 ergibt. Mit Hilfe des generierten Summensignals $U_{Sum}$ der einzelnen Summensignale $U_{In1}$ bis $U_{In3}$ kann mittels eines entsprechenden Steuergeräts insbesondere die Drehzahl ermittelt werden.

Hierbei lassen sich die Flanken und die damit assoziierten Pulse $P_{f1}$, $P_{f2}$, $P_{f3}$, $P_{r1}$, $P_{r2}$ und $P_{r3}$ und deren zeitliche Abstände zueinander heranziehen. Um mögliche Unterschiede zwischen aufsteigenden und absteigenden Flanken auszugleichen, kann bevorzugt eine Drehzahl aus dem Zeitabstand zwischen zwei Flanken, beziehungsweise deren zugeordneten Pulsen, gleicher Art (aufsteigende oder absteigende Flanken) bestimmt werden. Die hierfür erforderlichen Abständen zwischen den jeweiligen Pulsen, hier beispielhaft für die Pulse $P_{f1}$, $P_{f2}$, $P_{f3}$ fallender Signalflanken dargestellt, $\Delta t_1$, $\Delta t_2$, $\Delta t_3$ ergeben sich vorliegend aus den Zeiten $\Delta t_1 = t2 + t3$; $\Delta t_2 = t4 + t5$ und $\Delta t_3 = t6$ und des entsprechend nicht abgebildete zeitlichen Abschnitt t7. Wie bereits eingangs erwähnt, sind die Flanken durch die entsprechende Anordnung einer Anzahl an Permanentmagneten innerhalb der elektrischen Maschine gegeben. Im Falle von 6 Permanentmagneten, auch Polpaare genannt, ergeben sich somit insgesamt 18 fallende Flanken $fl_d$ und somit 18 zugehörige Werte pro Umdrehung in jeweils gleichen Abständen zueinander, sofern die Polpaare entsprechend äquidistant angeordnet sind. Während der genannten Zeitdifferenzen $\Delta t_1$, $\Delta t_2$ oder $\Delta t_3$ wird somit ein Winkel 360 Grad durch 18 = 20 Grad überstrichen. Diese Maschineninformationen der elektrischen Maschine können sowohl zur Ermittlung der Drehzahl, aber auch zur Ermittlung der Drehrichtung $\alpha_+$, $\alpha_-$ des Rotors 32 aber auch zur Bestimmung der Absolutposition des Rotors 32 der elektrischen Maschine 30 herangezogen werden.

Es versteht sich, dass entsprechend mit den Pulsen $P_{r1}$, $P_{r2}$, $P_{r3}$ die steigenden Flanken zugeordnet sind sowie deren Zeitabständen verfahren werden kann.

Durch Ermittlung der Winkelgeschwindigkeit $\omega_i$, die sich aus $\omega_i = 20°/\Delta t_i$ ergibt, lässt sich die Drehzahl $n_i$ aus $n_i = \omega_i/360° \cdot 60s/min$ in Umdrehungen pro Minute berechnen. Der Verfahrensschritt zur Ermittlung der Drehzahl wird auch nachfolgend als Schritt A3 bezeichnet. Die Pulsinformation $P_{f1}$, $P_{f2}$, $P_{f3}$, $P_{r1}$, $P_{r2}$ bis $P_{r3}$ kann darüber hinaus auch zur Bestimmung der Drehrichtung $\alpha_+$, $\alpha_-$ des Rotors 32 herangezogen werden. Dieser Schritt wird als A1 bezeichnet und ist schematisch in Figur 8a dargestellt. Hierauf kann aufgrund der zeitlichen Abfolge der Pulse $P_{f1}$, $P_{f2}$, $P_{f3}$, $P_{r1}$, $P_{r2}$ bis $P_{r3}$, die insbesondere aufgrund der jeweiligen Pulsbreiten $T_{Pf1}$, $T_{Pf2}$, $T_{Pf3}$, $T_{Pr1}$, $T_{Pr2}$, $T_{Pr3}$ voneinander unterscheidbar sind, auf die Drehrichtung des Rotors 32 der elektrischen Maschine 30 geschlossen werden. Folgen also dem Puls $P_{r1}$ mit der Pulsbreite $T_{Pr1}$ die Pulse $P_{f1}$ und anschließend $P_{r2}$, dreht die Kurbelwelle im Uhrzeigersinn $\alpha_+$, Folgen stattdessen auf die Pulse $P_{r1}$ mit der Pulsbreit $T_{Pr1}$ die Pulse $P_{f3}$ und anschließend $P_{r3}$, dreht die Kurbelwelle in entgegengesetzter Richtung $\alpha_-$ und somit entgegen dem Uhrzeigersinn. Somit kann aufgrund einer Erkennung der Pulse $P_{f1}$, $P_{f2}$, $P_{f3}$, $P_{r1}$, $P_{r2}$ und $P_{r3}$ auf die Drehrichtung des Rotors 32 der elektrischen Maschine rückgeschlossen werden.

Darüber hinaus lassen sich auch durch eine Ermittlung der jeweiligen Pulsbreiten $T_{Pf1}$, $T_{Pf2}$, $T_{Pf3}$, $T_{Pr1}$, $T_{Pr2}$, $T_{Pr3}$ die jeweiligen Pulse $P_{f1}$, $P_{f2}$, $P_{f3}$, $P_{r1}$, $P_{r2}$ und $P_{r3}$ ermitteln und unter einer Heranziehung von Eigenschaften der elektrischen Maschine 30, insbesondere der zuvor genannten Positionierung der Permanentmagnete innerhalb der elektrischen Maschine, die Drehwinkelposition $\vartheta_1$ des Rotors 32 ermitteln. Wie bereits eingangs erwähnt, sind die jeweiligen Pulse $P_{f1}$, $P_{f2}$, $P_{f3}$, $P_{r1}$, $P_{r2}$ und $P_{r3}$ mit aufsteigenden und absteigenden Flanken in den Eingangssignalen $U_{In1}$ bis $U_{In3}$ verknüpft. Die aufsteigenden und absteigenden Flanken wiederum sind verknüpft mit Maschinenparametern, wie der Anordnung der Permanentmagnete, der sogenannten Polpaare innerhalb der elektrischen Maschine. Somit geben die Pulse und deren relative Abstände zueinander ein entsprechendes Winkelinkrement an, innerhalb dem sich der Rotor 32 der elektrischen Maschine befindet.

Die Ermittlung der Drehwinkelposition $\vartheta_1$ des Rotors bzw. der Schritt zur Ermittlung der jeweiligen Drehwinkelposition ist in Figur 8 illustriert und der Schritt wird nachfolgend mit A2 bezeichnet. Eine weitere Ausgestaltung der Ermittlung der Drehwinkelposition $\vartheta_1$ aus dem Summensignal $U_{Sum}$ ist in Figur 8c näher erläutert. Hierbei wird ein beliebiger Positionspunkt P angenommen, der zu bestimmen ist. Dieser liegt vorliegend zwischen einem Puls $P_{f1}$ und einem Puls $P_{r2}$, kann jedoch grundsätzlich beliebig gewählt werden. Die Position befindet sich somit innerhalb eines Winkelinkrements, das über den Puls $P_{f2}$ und den Puls $P_{r2}$ mit den Polpaaren der elektrischen Maschine 30 verknüpft ist. Durch eine Heranziehung des Zeitabstands $\Delta t_{Pf1}$ zum Puls $P_{f1}$ und $\Delta t_{Pr2}$ zum Puls $P_{r2}$ und Heranziehung einer Drehzahl, insbesondere einer mittleren Drehzahl innerhalb des Zeitabschnitts zwischen dem Puls $P_{f1}$ und $P_{r2}$ kann somit die Lage des Rotors in der Position P über das Winkelinkrement hinaus noch genauer angegeben werden.

In Figur 8d ist allgemein ein Ablaufdiagramm des Verfahrens gemäß einer ersten Ausführungsform angegeben. In Schritt S1 werden zumindest zwei Eingangssignale, vorzugsweise in Form von Phasensignalen, ermittelt. Im Schritt S2 werden die Flanken in Form von aufsteigenden Flanken $Fl_u$ und abfallenden Flanken $Fl_d$ der Eingangssignale $U_{In1}$ bis $U_{In3}$ mit entsprechenden Pulsen $P_{f1}$, $P_{f2}$, $P_{f3}$, $P_{r1}$, $P_{r2}$ und $P_{r3}$ kodiert. Die sich daraus ergebenden Signalfolgen werden in Schritt S3 zu einem Summensignal $U_{Sum}$ zusammengeführt. Anhand des Summensignals, das im Schritt S3 generiert wird, kann, wie zuvor beschrieben, anhand der charakteristischen Eigenschaften der Pulse $P_{f1}$, $P_{f2}$, $P_{f3}$, $P_{r1}$, $P_{r2}$ und $P_{r3}$, bzw. deren Abfolge und/oder deren zeitlichen Abstand zueinander, die Drehzahl im Schritt A3, die Drehrichtung im Schritt A1 und die Drehwinkelposition im Schritt A2 der Welle, insbesondere des Rotors 32 der elektrischen Maschine 30 und hieraus über die Kopplung des Rotors an die Kurbelwelle der elektrischen Maschine 30 auch die Drehzahl, die Drehwinkelposition bzw. die Drehrichtung der Kurbelwelle 17 der Brennkraftmaschine 110 ermittelt werden. Es versteht sich grundsätzlich, dass die Schritte A1 bis A3, bei denen die Drehzahl, die Drehwinkellage bzw. die Drehrichtung des Rotors ermittelt werden, alternativ anwendbar sind, aber auch kumulativ angewendet werden können.

Neben den gezeigten zwei Realisierungsformen sind auch weitere Schaltungen vorstellbar, die zumindest eines der Eingangssignale, um ein eindeutiges Merkmal, speziell einen Signalpuls mit eindeutiger Länge, erweitert an den Ausgang weitergeben und mit den anderen (nicht modifizierten) Eingangssignalen so überlagern, dass später bei der Auswertung des Summensignals ein Rückschluss darauf möglich ist, welche Signalflanke durch welches Eingangssignal verursacht wurde.

In Figur 9 ist ein weiteres zeitliches Ablaufdiagramm einer weiteren Ausführungsform des Verfahrens zur Ermittlung der Drehzahl n abgebildet, das zumindest vier aufeinanderfolgende Schritte $SU_1$, $SU_2$ $SU_3$ und $SU_4$ aufweist. Im ersten Schritt $SU_1$ werden die einzelnen Phasensignale Uu, Uv, Uwbzw. $I_U$, Iv, Iw der elektrischen Maschine 30 ermittelt. In einem weiteren Schritt $SU_2$ werden die erhaltenen Phasensignale Uu, Uv, Uwbzw. je nach Anzahl der Phasen einzelne der Phasensignale Uu, Uv, Uw kodiert und zu einem Summensignal $U_{Sum}$ (vgl. hierzu die Abbildungen 7 und 8) zusammengefasst. Im weiteren Schritt $SU_3$ wird das Summensignal $U_{Sum}$ dekodiert und in seine Einzelbestandteile der getriggerten oder ungetriggerten Phasensignale Uu, Uv, Uw zerlegt, wobei zudem die Abstände von aufsteigenden bzw. abfallenden Flanken der Phasensignale Uu, Uv, Uw der jeweiligen Phasen erkannt und die zeitlichen Abstände $\Delta t_1$, $\Delta t_2$, $\Delta t_3$ (vgl. hierzu Figur 6b) ermittelt werden. Im Schritt $SU_4$ werden aus den zeitlichen Abständen $\Delta t_1$, $\Delta t_2$, $\Delta t_3$ die Drehzahl n der elektrischen Maschine 30 ermittelt. Aufgrund der Tatsache, dass den jeweiligen Phasensignalen Uu, Uv, Uw im Summensignal $U_{Sum}$ jeweils charakteristischen Eigenschaften mittels einer Kodierung C aufgeprägt werden, sind diese im Summensignal $U_{Sum}$ ohne weiteres voneinander unterscheidbar, weshalb anhand der einzelnen abfallenden und aufsteigenden Flanken, die unmittelbar den einzelnen Phasensignalen Uu, Uv und Uw zugeordnet werden können, die zeitlichen Abstände $\Delta t$ und damit die Drehzahl n der Welle 17 ermittelbar ist.

Anhand der Abbildungen in Figur 10 soll ein weiterer Verfahrensschritt zur Korrektur der Phasensignale Uu, Uv, Uw erläutert werden, der dazu dient, Störeinflüsse auf die Grundperiodizität des jeweiligen Phasensignals Uu, Uv und Uw höherer Ordnungen zu beseitigen, um damit eine noch genauere Ermittlung der Drehzahl n, die mit der Grundperiodizität korreliert ist, zu gewährleisten. Dieser weitere Verfahrensschritt kann derart implementiert werden, dass in einem ersten Schritt $SU_{4a}$ die Drehzahl n aus einem unbereinigten Rohsignal der Drehzahl n, wie zuvor beschrieben, ermittelt wird, in einem weiteren Schritt $SU_{4b}$ die Korrekturfaktoren K ermittelten werden (vgl. Figur 9) und eine korrigierte Drehzahl $n_{corr1}$ aus den ermittelten oder bereits vorhandenen Korrekturfaktoren K berechnet wird $SU_{4c}$. Hierdurch kann das Rohsignal der Drehzahl von Frequenzeinflüssen höherer Ordnung bereinigt werden.

Hierzu zeigt Figur 10a den Verlauf von drei Phasenspannungen Uu, Uv und Uw, die eine Grundperiodizität der Ordnung 1 und Frequenzanteile höherer Ordnung aufweisen. In Figur 10b ist entsprechend eine Frequenzanalyse zumindest einer der Phasensignale Uu, Uv und Uw gezeigt, wobei hier Amplituden P über ganzzahlige vielfache der Grundfrequenz aufgetragen sind. Grundsätzlich ist anzumerken, dass je nach Aufbau einer elektrischen Maschine 30, die Ausgangssignale Uu, Uv und $U_W$ entsprechend variieren können. Neben der Grundfrequenz $f_0$ (in Figur 10b gezeigt mit Ordnung 1 der Phasenspannungen $U_U$, $U_V$ und $U_W$) können die Ausprägung der Magnete und Spulen des Stators und das Design von Rotor 32 und Stator 30 Oberschwingungen anregen, die ein ganzzahliges vielfaches der Grundfrequenz mit Ordnung 1 darstellen und diese Grundfrequenz entsprechend überlagern. Dies ist in Figur 10 anhand der multiplen Welligkeit der Phasensignale Uu, $U_V$ und $U_W$ zu erkennen und kann anhand der Frequenzanalyse, wie sie in Figur 10b bzw. in den Figuren 10b und 10e gezeigt sind, entsprechend deutlich erkannt werden, wenn man sieht, dass neben der Grundfrequenz mit Ordnung 1 (in den Abbildungen 10d und e mit Ordnung 0,5) entsprechende weitere Frequenzanteile $f_n$ höherer Ordnung überlagert sind. Auch weitere Störeinflüsse, die von der Grundfrequenz abweichen und höherfrequent oder niederfrequent gegenüber der Grundfrequenz sind, können entsprechend erkannt werden. Ordnung 1 entspricht hierbei der Frequenz der Kurbelwelle und Ordnung 0,5 der Arbeitsfrequenz eines Verbrennungsmotors im Falle eines Viertaktmotors mit einem Zylinder. Das zuvor beschriebene Verfahren ist entsprechend auf Viertaktmotoren mit mehreren Zylindern aber auch auf Zweitaktmotoren skalierbar.

Diese gezeigten Toleranzen und Konstruktionsmerkmale haben einen starken Einfluss auf das Drehzahlsignal n welches als gemessenes Signal in Figur 10c exemplarisch darstellt ist. Hier ist eine deutliche Zackung der Kurve im zeitlichen Verlauf zu erkennen. Diese Zackung bzw. das hier gezeigte Sägezahn-Muster, das auf der Messung an einer dreiphasigen elektrischen Maschine mit sechs Polpaaren beruht, wiederholt sich vorliegend bei einer entsprechenden Abtastrate alle drei Stützstellen, wobei die Periodizität der Zackung mit der Anzahl der Phasen der elektrischen Maschine 30 korreliert. Es werden nun nachfolgend weitere Verfahrensschritte zur Kompensation der Störeinflüsse, insbesondere am Beispiel einer dreiphasigen elektrischen Maschine mit sechs Polpaaren erläutert.

Grundsätzlich versteht sich, dass die nachfolgend beschriebenen Verfahrensschritte zur Kompensation dieser Störeinflüsse sich nicht auf dreiphasige elektrischen Maschinen mit einer entsprechenden Anzahl an Polpaaren beschränkt, sondern auch auf elektrische Maschinen mit einer beliebigen Anzahl an Phasen bzw. Polpaaren anwendbar ist.

In einem ersten Verfahrensschritt zur Korrektur der Drehzahl n wird das Frequenzspektrum eines Arbeitsspiels oder einer ersten Umdrehung der Welle 17 ausgewertet (bezüglich des Frequenzspektrums vgl. hierzu die Figuren 10b, d und e). Grundsätzlich ist zu erkennen, dass sich die jeweiligen Phasenspannungen $U_U$, $U_V$, $U_W$ der elektrischen Maschine 30 sich pro Umdrehung der Welle 17 mit der Anzahl der vorhandenen Magnet, somit sechs Mal pro Umdrehung wiederholen. Pro Periode der Ausgangsspannung der Phasen Uu, Uv, Uw, sind entsprechend zwei Nulldurchgänge der Spannung zu erkennen. Die Abfolge der Phasenspannungen $U_U$, $U_V$, $U_W$ wiederholt sich vorliegend mit sechsfacher Kurbelwellenfrequenz. Die Abfolge der Nulldurchgänge der jeweiligen Phasenspannungen $U_U$, $U_V$, $U_W$ der unterschiedlichen Phasen wiederholt sich mit der doppelten Anzahl der verwendeten Magnete, bei sechs Magneten also mit zwölffacher Kurbelwellenfrequenz. Die Abfolge von Nulldurchgängen mit positiver und negativer Steigung, also mit aufsteigenden und abfallenden Flanken im Phasensignal Uu, Uv, und Uw, wiederholt sich jeden zweiten Nulldurchgang der Spannung, also mit achtzehnfacher Kurbelwellenfrequenz. Es versteht sich dass die Kurbelwellenfrequenz immer die Frequenz der Grundordnung also im Beispiel der Figur 10 b mit Ordnung N = 1 bzw. den Figuren 10d und e mit Ordnung n = 0,5 ist. Es sei noch kurz erwähnt, dass in Figur 10e zur besseren Darstellbarkeit der höheren harmonischen der Grundfrequenz die Grundfrequenz n = 0 ausgeblendet wurde.

Es werden bevorzugt Ordnungen $O_n$ korrigiert, die direkt von der Periodizität der elektrischen Maschine 30 abhängen. Diese können folgendermaßen bestimmt werden (die in Klammern angegebenen Werte ergeben sich am Beispiel einer dreiphasigen elektrischen Maschine mit sechs Polpaaren):
Sei N die Anzahl an Phasen U, V, W und p die Polpaarzahl der elektrischen Maschine 30.

Damit ergeben sich pro Umdrehung der Welle 17 der elektrischen Maschine 30 N mal p elektrische Perioden, die jeweils einen Nulldurchgang mit steigender und fallender Flanke aufweisen. Die Gesamtzahl A an Stützstellen eines entsprechenden Drehzahlsignals n beträgt daher:

$$A = 2 * N * p, (= 2 * 3 * 6 = 36)$$

Eine dritte Ordnung $O_3$ ergibt sich aus einem möglichen unterschiedlichen Verhalten von steigenden und fallenden Flanken (unabhängig von der Phase). Die Anzahl entsprechender steigender Flanken $F_s$ oder fallender $F_f$ pro Umdrehung der Welle der elektrischen Maschine beträgt dabei:

$$F_s = F_f = N * p, (= 3 * 6 = 18)$$

Eine zweite Ordnung $O_2$ ergibt sich aus einem möglichen unterschiedlichen Verhalten der N verschiedenen Phasen.
Die Anzahl der entsprechenden Flanken $F_p$ pro Umdrehung der Welle der elektrischen Maschine beträgt dabei:

$$F_p = 2 * p, (= 2 * 6 = 12)$$

Eine erste Ordnung $O_1$ ergibt sich aus einem möglichen unterschiedlichen Verhalten der steigenden und fallenden Flanken der einzelnen Phasen.
Die Anzahl der entsprechenden steigender Flanken $F_{sp}$ oder fallenden Flanken $F_{fp}$ pro Umdrehung der Welle der elektrischen Maschine beträgt dabei:

$$F_{sp} = F_{fp} = p, (= 6)$$

Bezogen auf eine Umdrehung der Welle der elektrischen Maschine (Grundfrequenz) ergeben sich die überwiegend Maschinen-relevanten Ordnungen, die gegebenenfalls kompensiert werden müssen aus der Anzahl der oben genannten unterschiedlichen Flanken:

- Ordnung $O_1$ (=6) für Abweichungen zwischen steigenden und fallenden Flanken der einzelnen Phasen entsprechend der Polpaarzahl
- Ordnung $O_2$ (=12) für Abweichungen zwischen Flanken der unterschiedlichen Phasen entsprechend der doppelten Polpaarzahl
- Ordnung $O_3$ (=18) für Abweichungen zwischen steigenden und fallenden Flanken (unabhängig der Phase) entsprechend der doppelten Polpaarzahl mal Flankenzahl

Grundsätzlich sei angemerkt, dass auf dem zuvor beschriebenen Frequenzanteilen, insbesondere den Frequenzanteilen höherer Ordnung (n > 1) bei Brennkraftmaschinen 112 mit bis zu fünf Zylindern keine weiteren Störeinflüsse zu erwarten sind, die in ein ähnliches Frequenzspektrum fallen. Wird nun ein entsprechendes Drehzahlsignal n(t) eines Arbeitsspiels bzw. einer ersten Umdrehung in den Frequenzraum transformiert, dann müssen die in Abbildung 10d und 10e dargestellten Anteile des Spektrums bei sechs-, zwölf- und achtzehnfacher Kurbelwellenfrequenz durch Unterschiede zwischen den einzelnen Nulldurchgängen bzw. Phasen der elektrischen Maschine 30 bedingt sein. Diese Unterschiede lassen sich auf die oben angezeigten Toleranzen bzw. Konstruktionsmerkmale als fundamentale Ursachen zurückführen.

Hierdurch können Korrekturterme für einen weiteren Umlauf der Welle 17 berechnet werden, die sich aus dem Summensignal der drei genannten Oberschwingungen ergeben. Um den Einfluss der niederfrequentesten Schwingung auf der sechsfachen Kurbelwellenfrequenz zu eliminieren, sind sechs verschiedene Korrekturterme notwendig. Damit erhält jeder Nulldurchgang jeder Phase der elektrischen Maschine 30 einen eigenen Korrekturterm.

Die jeweiligen Korrekturterme ergeben sich zu:

$$Korrekturterm(k) = \sum_{i=1}^{3}\left(\left|N_{mot,Freq}\right|\left(\frac{L*i}{6}\right)*\cos\left(2*\pi*\frac{k*i}{6}+\angle_{N_{mot,Freq}}\left(\frac{L*i}{6}\right)\right)\right); k \in [0,5],$$

wobei Betrag $N_{Mot, Freq}$ (k) den Betrag der k-ten Schwingung des Frequenzspektrums und $\angle_{Nmot}$ die Phase der k-ten Schwingung des Frequenzspektrums bezeichnet.

Die nullte Schwingung bezeichnet dabei den Gleichanteil des Frequenzspektrums. L bezeichnet die Anzahl der Drehzahlstützstellen, die zur Berechnung des Frequenzspektrums verwendet werden, bei einem dreiphasigen Generator mit sechs Polpaaren gilt L = 36.

Eine Länge von 36 Stützstellen ergibt sich bei Ermittlung des Frequenzspektrums über eine Umdrehung der Kurbelwelle eines Verbrennungsmotors. Während der Umdrehung der Kurbelwelle weißt der Generator für jede Phase sechs elektrische Perioden pro Phase auf. Damit ergeben sich sechs mal zwei Flanken pro Phase und damit 36 Flanken bzw. Stützstellen für alle drei Phasen pro Umdrehung.

Neben der Möglichkeit, die Korrekturterme aus dem Frequenzspektrum einer Umdrehung zu bestimmen, kann alternativ auch ein anderer Zeitraum, beispielsweise eine halbe Umdrehung (L = 18) oder ein komplettes Arbeitsspiel (2 Umdrehungen, L = 72) zur Bestimmung verwendet werden.

Hierfür müssen die Ordnungen, die korrigiert werden sollen und die damit verbundenen Formeln entsprechend an die neue Grundfrequenz angepasst werden.

Wie bereits erläutert, stehen die Korrekturterme für eine Umdrehung bzw. ein Arbeitsspiel erst nach deren Berechnung mittels des Frequenzspektrums zur Verfügung. Da grundsätzlich Drehzahlunterschiede zwischen zwei aufeinanderfolgenden Arbeitsspielen bzw. Umdrehungen ausreichend gering sind, können die hieraus erhaltenen Korrekturterme, die auf Basis des ersten Arbeitsspiels bzw. der ersten Umdrehung der Welle 17 berechnet wurden, für die Korrektur des darauffolgenden Arbeitsspiels bzw. der darauffolgenden Umdrehung der Welle 17 verwendet werden, ohne dass durch eine entsprechende Korrektur zusätzliche Abweichungen zu erwarten wären. Somit gilt, dass für die Korrektur während eines Arbeitsspiels bzw. einer Umdrehung einer Welle 17 die ermittelten Terme (vgl. Korrekturgleichung) des vorhergehenden Arbeitsspiels bzw. der Welle 17 verwendet werden.

Grundsätzlich versteht sich, dass es nicht zwingend erforderlich ist, die Korrekturterme für ein erstes Arbeitsspiel bzw. eine erste Umdrehung der Welle 17 zu lernen, um diese auf eine unmittelbar darauffolgende Umdrehung der Welle 17 anzuwenden. Die Korrekturterme können grundsätzlich auch nur gelegentlich gelernt und so lange verwendet werden, wie sich die Drehzahl n in einem begrenzten Toleranzband bewegt. Erst für größere Drehzahlabweichungen, die außerhalb des zuvor definierten Toleranzbandes liegen, wird somit eine erneute Ermittlung neuer Korrekturterme eingeleitet. Außerdem ist es möglich, dass entsprechende Korrekturterme auch nur gelegentlich gelernt werden und in Abhängigkeit der Drehzahl n der elektrischen Maschine 30 in einem Kennfeld abgelegt werden. In den zuvor genannten Fällen kann das Lernen der Korrekturterme immer in geeigneten Betriebspunkten wie z. B. in Bereichen mit wenig Dynamik innerhalb der Drehzahl n erfolgen.

Da sich der tatsächliche Drehzahlverlauf n eines Arbeitsspiels bzw. einer Umdrehung der Welle 17 aus der Summe aller Anteile des Frequenzspektrums $f_n$ ergibt, werden die dazugehörigen Korrekturterme einer Drehzahlstützstelle von der berechneten Drehzahl n abgezogen, um den Einfluss dieser Oberwellen zu eliminieren und damit die Einflüsse von Toleranzen und Konstruktionsmerkmalen zu unterdrücken. Eine derart korrigierte Drehzahl $n_{Corr1}$ ist ein Abbildung 10f als durchgezogene Linie gezeigt, wobei die gepunktete Linie entsprechend das unkorrigierte Drehzahlsignal n (t) zeigt.

Eine weitere Alternative zur Korrektur des Drehzahlsignals n und zur Beseitigung von Frequenzanteilen höherer Ordnung ist eine sogenannte Tiefpassfilterung. Im Falle der betrachteten elektrischen Maschine 30 mit drei Phasen und sechs Polpaaren entsprechend obiger Beschreibung bietet sich grundsätzlich ein sogenanntes Moving-Average-Filter der Ordnung 6 an, der im Rahmen eines gleitenden Mittelwerts über sechs Werte mittelt. Durch eine derartige Auslegung ergibt sich die erste Nullstellung bei der Ordnung 6. Weiterhin hat dieses Filter null Stellen in der Ordnung 12 und 18, so dass alle relevanten Störungen beseitigt werden.

Grundsätzlich kann es vorteilhaft sein, die sich ergebende Dämpfung des Filters bis zur Ordnung 4 über ein einfaches Filter weiter zu kompensieren.

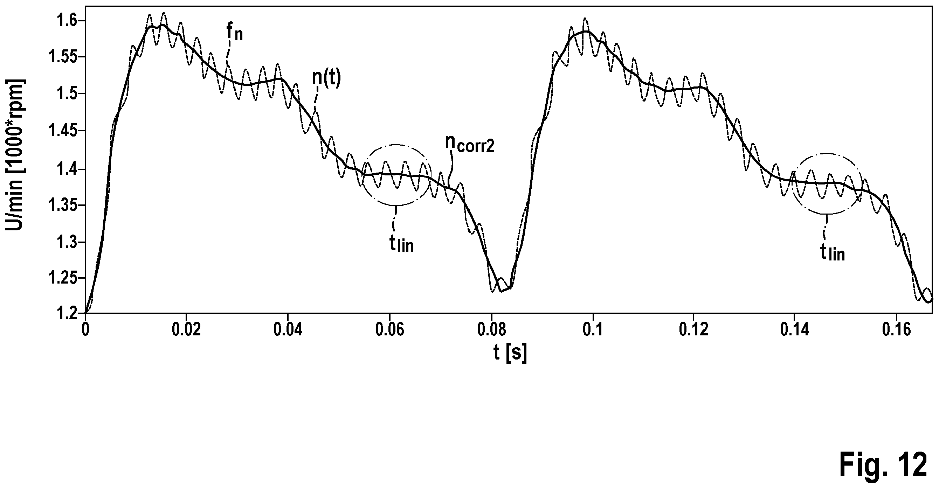

Alternativ kann auch ein anderes komplizierteres Tiefpassfilter verwendet werden mit einer ausreichenden Dämpfung (bzw. sogar Nullstelle) bei der Ordnung 6, 12 und/oder 18. Durch Vergleich der Rohsignale mit den gefilterten Werten kann für jede Flanke ein Korrekturwert bestimmt werden. Vorteilhafterweise wird dabei noch der allgemeine Drehzahltrend $n_T$ (vgl. hierzu die Beschreibung zu den Figuren 11 und 12) berücksichtigt. Da die mit dem Frequenzanteil $f_6$ der sechsten Ordnungen assoziierte Energie nur sehr geringfügig ist, kann auch ein Filter verwendet werden, welches die Ordnung 12 und höher unterdrückt.

Hier bietet sich z. B. ein Moving-Average-Filter der Ordnung 3 an, mit dem für die in diesem Fall 36 gegebenen Flanken eine Nullstelle bei der Ordnung 12 gegeben ist. Vorteil dieser Auslegung ist, dass die Nutz-Signalenergie bis Ordnung in etwa 3 bis 4 nur minimal gedämpft wird. Für eine andere Flankenzahl muss das Filter entsprechend angepasst werden. Auch anhand dieser Korrektur können dann wieder Korrekturfaktoren k für die Flanken berechnet werden, da bei einer Filterung die Laufzeit, z. B. für die Berechnung der Zündung, negativ sein kann. Neben der Möglichkeit, die Korrekturterme auf Basis des Frequenzspektrums des Drehzahlsignals zu berechnen und diesen Verlauf zu korrigieren, können auch Korrekturterme für den Verlauf der Flankenzeiten, die durch die Zeit zwischen zwei Nulldurchgängen der Phasenspannungen Uu, Uv, bzw. $U_W$ gegeben sind, oder den Verlauf der Energie während eines Arbeitsspiel aus deren Frequenzspektren bestimmt werden.

Ein weiterer Verfahrensschritt zur verbesserten Bestimmung der Drehzahl n einer Welle 17 ist anhand des Ablaufdiagramms der Figuren 11a bis 11c dargestellt. Die sich hieraus ergebende korrigierte Drehzahl $n_{Corr2}$ ist in Figur 12 dargestellt. Diese weiteren Verfahrensschritte werden vorzugsweise alternativ zu den Schritten SU$_{4a}$, SU$_{4b}$, SU$_{4c}$ implementiert (vgl. Figuren 9, 10), können jedoch auch kumulativ dazu vor oder nachgelagert durchgeführt werden. Durch eine kumulative Korrektur kann eine noch bessere Signalgüte erreicht werden. Hierbei werden wie in Figur 11a, b zu sehen, innerhalb eines gewählten Zeitbereichs $t_{lin}$ eine Anzahl an aufeinanderfolgenden Drehzahlpunkten $n_1$ bis $n_n$ gewählt, wobei vorliegend sechs aufeinanderfolgende Drehzahlpunkte $n_1$ bis $n_6$ gewählt werden. Die Anzahl der Drehzahlpunkte ist vorzugsweise ein ganzzahliges Vielfaches der Anzahl der Phasen U, V, W der elektrischen Maschine 30. Wie in Figur 11a zu sehen, werden die Drehzahlpunkte $n_1$ bis $n_6$ derart aufgeteilt, dass den ersten Drehzahlwerten $n_1$ bis $n_3$ ein erster Mittelwert $n_{M1}$ und den weiteren Drehzahlwerten $n_4$ bis $n_6$ ein weiterer Mittelwert $n_{M2}$ zugeordnet werden, wobei die jeweiligen Mittelwerte $n_{M1}$ und $n_{M2}$ aus dem zugeordneten Drehzahlwerten $n_1$ bis $n_6$ berechnet werden. Diese zwei Mittelwerte $n_{M1}$ und $n_{M2}$ die aus den zuvor genannten Drehzahlwerten $n_1$ bis $n_6$ berechnet werden, dienen zur Berechnung des linearen Drehzahltrends $n_T$ innerhalb des gewählten Zeitbereichs $t_{lin}$.

Grundsätzlich versteht sich, dass eine beliebig andere Anzahl an Drehzahlpunkten $n_1$ bis $n_n$ zur Bestimmung des linearen Trends $n_T$ verwendbar ist. Es sollte jedoch grundsätzlich beachtet werden, dass die zeitliche Breite des gewählten Bereichs $t_{lin}$ lediglich eine mäßige Dynamik des Drehzahlverlaufs n, vorzugsweise einen näherungsweisen linearen Verlauf, aufweisen sollte, da lediglich eine lineare Annäherung des Drehzahltrends $n_T$ erfolgt. Anhand des in Figur 11a beschriebenen Verfahrensschritts werden zwei Mittelwerte $n_{M1}$ und $n_{M2}$ bestimmt, die den Zeitpunkten des Auftretens von $n_2$ und $n_5$ zugeordnet werden. Der zeitliche Abstand zwischen diesen Werten beträgt $\Delta t$. Zwischen diesen Mittelwerten $n_{M1}$ und $n_{M2}$ wird linear interpoliert und so für dieses Zeitintervall ein linearer Drehzahltrend $n_T$ bestimmt.

Gemäß Figur 11b wird das Zeitintervall $\Delta t$ zwischen den ermittelten Mittelwerten $n_{M1}$ und $n_{M2}$ gedrittelt und die zugehörige Drehzahl der Zeitpunkte $t_1$ und $t_2$ aus dem linearen Drehzahltrend errechnet.

Zusammen mit dem zweiten Mittelwert $n_{M2}$ ergeben sich so drei Drehzahlpunkte $n_{LM1}$, $n_{LM2}$, $n_{LM3}$, die auf dem linearen Drehzahltrend $n_T$ liegen.

Wie bereits eingangs erwähnt, kann bei einer anderen Phasenzahl $\eta$ der elektrischen Maschine als 3, die jeweiligen Bereich $t_{lin}$ und die Anzahl der Korrekturfaktoren für eine größere Anzahl als drei an Phasen vergrößert bzw. für eine kleinere Anzahl an Phasen als 3 verkleinert werden.

Aus dem Verhältnis zwischen den linearen Werten $n_{LM1}$, $n_{LM2}$, $n_{LM3}$ des Drehzahltrends $n_T$ und den zeitlich entsprechenden Drehzahlwerten $n_3$ bis $n_5$, die nachfolgend auch als $n_{gemessen}$ bezeichnet werden, wird anhand einer Stützstelle die Korrekturfaktoren innerhalb eines Arbeitsspiels bzw. einer Umdrehung der Welle 17 bestimmt, die die jeweiligen zeitlich entsprechenden Drehzahlstützstellen $n_3$ bis ns an den linearen Trend $n_T$ angleichen. Dies ist insbesondere in Figur 11b zu sehen, da hier lediglich die zeitlich korrespondierenden Mittelwerte $n_{LM1}$ mit der jeweiligen Drehzahlstützstelle $n_3$ der Mittelwert $n_{LM2}$ mit der Drehzahlstützstelle $n_4$ und der Drehzahlmittelwert $n_{LM3}$ mit der Drehzahlstützstelle $n_5$ abgeglichen wird. Hieraus ergeben sich drei Korrekturfaktoren $K_h$ für die jeweilige Phase, wobei $h \in [1; 3]$, zu:

$$K_h = n_T : n_{gemessen}(t),$$

wobei sich die korrigierte Drehzahl $n_{Corr2}$ entsprechend ergibt nach:

$$n_{Corr2} = K_h \times n_{gemssen}(t+1).$$

Durch die Periodizität der Phasensignale entsprechend der Polpaarzahl der elektrischen Maschine wiederholen sich innerhalb eines Arbeitsspiels bzw. einer Umdrehung der Welle 17 die Signale der Phasen mehrmals. Es genügt daher, die ermittelten Korrekturfaktoren $K_h$, wobei $h \in [1; 3]$, gemäß obiger Formeln für den weiteren Verlauf des Arbeitsspiels bzw. der Umdrehung für die weiteren Auftrittszeitpunkte der Drehzahlpunkte eines Phasensignals zur Korrektur der Toleranz- und Konstruktionseinflüsse anzuwenden und so einen korrigierten Drehzahlverlauf $n_{Corr2}$ für das gesamte Arbeitsspiel bzw. die Umdrehung zu erhalten.

Im nächsten Arbeitsspiel können entsprechend drei neue Korrekturfaktoren für den entsprechenden Zeitbereich, wie oben beschrieben, berechnet werden. Es versteht sich jedoch, dass die Korrekturen für die weiteren Arbeitsspiele bzw. die weiteren Umdrehungen der Welle 17 alternativ auch nur gelegentlich gelernt und solange verwendet werden können, wie sich die Drehzahl n innerhalb eines begrenzten Drehzahlbandes bewegt. Erst für eine größere Dynamik einer Drehzahl bzw. einer Drehzahlabweichung, die das entsprechend definierte Drehzahlband übersteigt, müssen in einem entsprechenden Drehzahlfenster neue Korrekturterme $K_h$ berechnet werden, die entsprechend auf nachfolgende Zeitfenster $t_{lin}$ bzw. Arbeitsspiele oder Umdrehungen der Welle angewandt werden. Auch ein Ablegen über den jeweiligen Drehzahlverlauf n der Korrekturfaktoren $K_h$ in einem Kennfeld ist möglich, dass entsprechend eines jeweils vorliegenden Drehzahlverlaufs n(t) die jeweiligen Korrekturfaktoren $K_h$ zur Korrektur der Drehzahl n(t) zu einer weiter korrigierten Drehzahl $n_{Corr2}$ verbessert werden können.

Zudem kann neben der Möglichkeit, die Korrekturterme $K_h$ auf Basis der Drehzahl n zu berechnen und diesen Verlauf zu korrigieren, auch Korrekturfaktoren für den Verlauf der Flankenzeiten (wie oben definiert Zeit zwischen zwei Nulldurchgängen einer jeweiligen Phasenspannung Uu, Uv, Uw), anhand dem zuvor beschriebenen Verfahren in gleicher Weise bestimmt werden.

In Figur 12 ist der nicht korrigierte Drehzahlverlauf n(T) als gestrichelte Linie und der anhand des zuvor beschriebenen Verfahrens korrigierte Drehzahlverlauf $n_{Corr2}$ als durchgezogene Linie angegeben. Hierbei ist deutlich zu sehen, dass die Frequenzanteile höherer Ordnung $f_n$ die als hochfrequente Zacken im Drehzahlsignal n(t) zu erkennen sind, entsprechend herauskorrigiert sind. Auch die für die Korrekturfaktoren relevanten Zeitfenster $t_{lin}$, in denen der zeitliche Drehzahlverlauf keine große Dynamik, vorzugsweise annähernd konstant verläuft, ist in Figur 12 innerhalb der umkreisten Bereiche dargestellt.

Sowohl für die dargestellte Korrektur des Drehzahlverlaufs mittels frequenzbasiertem Verfahren, als auch bei der Korrektur mittels Drehzahltrendschätzung oder einer Kombination beider Verfahren kann im Anschluss die korrigierte Drehzahl dazu verwendet werden, die Drehwinkelpositionsinformation der Welle zu korrigieren und so eine verbesserte Steuerung der Brennkraftmaschine zu erzielen.

Eine Korrektur kann beispielsweise derart erfolgen, dass zur Berechnung der Drehzahl aus einer gemessenen Zeit zwischen zwei Signalflanken des Drehsignals ein zugehöriger überstrichener Winkel der Welle in dieser Zeit angenommen wird. Durch Fehler im Signal, werden die Signalflanken gegebenenfalls nicht an der angenommenen Wellenposition detektiert, der Winkel und die daraus errechnete Drehzahl sind also fehlerbehaftet. In der korrigierten Drehzahl werden diese Fehler korrigiert, sodass unter Verwendung der gleichen Zeitinformation auf den tatsächlichen Winkel zwischen den Signalflanken zurückgerechnet werden kann und somit auch die Position der Flanke und damit die Drehwinkelposition entsprechend korrigiert werden kann.

Allgemein versteht sich, dass die zuvor beschriebenen Verfahren sich nicht in einer Verwendung der beschriebenen dreiphasigen elektrischen Maschine 30 erschöpfen, sondern auf eine beliebige elektrische Maschine 30, die entweder permanent oder fremderregt sein kann entsprechend angewendet werden kann, wobei die Anzahl an Phasen, wie zuvor bereits erwähnt, in dem Verfahren entsprechend berücksichtigt werden kann.

Zudem können die zuvor beschriebenen Verfahrensschritte zur Drehzahlkorrektur in Alleinstellung aber auch in Kombination miteinander verwendet werden, wobei bei einer Kombination eine noch bessere Korrektur der Drehzahlwerte erreicht werden kann. Auch eine alternative Heranziehung der mit den Drehzahlen assoziierten Zeitpunkten bzw. deren Verläufen kann zur Korrektur des Drehzahlsignals herangezogen werden.

**Patentansprüche**

1.  Verfahren zur Bestimmung einer Drehgröße, insbesondere einer Drehwinkelposition ($\vartheta$, $\vartheta_1$) einer Welle (17), insbesondere einer Kurbelwelle (17') einer Brennkraftmaschine (112), welche mit einer elektrischen Maschine (30), umfassend einen Rotor (32) und einen Stator (33) mit zumindest zwei Phasenwicklungen (U, V, W), aus denen jeweils zumindest ein Phasensignal (Uu, Uv, Uw, $I_U$, Iv, Iw) abgeleitet wird, direkt oder übersetzt gekoppelt ist, wobei die Phasensignale (Uu, Uv, Uw, $I_U$, Iv, Iw) jeweils aufsteigende Flanken ($Fl_{Uu}$, $Fl_{Vu}$, $Fl_{Wu}$), abfallende Flanken ($Fl_{Vd}$, $Fl_{Vd}$, $Fl_{Wd}$) und Nulldurchgänge ($Fl_{U0}$, $Fl_{V0}$, $Fl_{W0}$) aufweisen, wobei ein Summensignal ($U_{Sum}$), umfassend mehrere Phasensignale ($U_U$, $U_V$, $U_W$, $I_U$, $I_V$, $I_W$) der elektrischen Maschine (30), derart erzeugt wird, dass den aufsteigenden Flanken ($Fl_{Uu}$, $Fl_{Vu}$, $Fl_{Wu}$), abfallenden Flanken ($Fl_{Ud}$, $Fl_{Vd}$, $Fl_{Wd}$) und Nulldurchgängen ($Fl_{U0}$, $Fl_{V0}$, $Fl_{W0}$) jeweils ein charakteristischer Puls ($P_{f1}$, $P_{f2}$, $P_{f3}$, $P_{r1}$, $P_{r2}$, $P_{r3}$) im Summensignal ($U_{Sum}$) zugeordnet wird, wobei die Pulse ($P_{f1}$, $P_{f2}$, $P_{f3}$, $P_{r1}$, $P_{r2}$, $P_{r3}$) zur Ermittlung der Drehzahl (n), der Drehwinkelposition ($\vartheta$, $\vartheta_1$) oder der Drehrichtung ($\alpha_+$, $\alpha_-$) des Rotors (32) herangezogen werden,
    **dadurch gekennzeichnet, dass** die Pulse, die einem ersten Flankentyp, aufweisend aufsteigende Flanken ($Fl_{Uu}$, $Fl_{Vu}$, $Fl_{Wu}$) oder absteigende Flanken ($Fl_{Ud}$, $Fl_{Vd}$, $Fl_{Wd}$) zugeordnet sind, eine konstante erste Pulsbreite ($T_{Pf1}$, $T_{Pf2}$, $T_{Pf3}$) aufweisen und die Pulse, die einem entsprechend anderen Flankentyp zugeordnet sind, konstante aber zueinander verschiedene weitere Pulsbreiten ($T_{Pr1}$, $T_{Pr2}$, $T_{Pr3}$) aufweisen.

2.  Verfahren nach Anspruch 1, wobei durch Kodierung (C) der abfallenden Flanken ($Fl_{Ud}$, $Fl_{Vd}$, $Fl_{Wd}$) der jeweiligen Phasensignale (Uu, Uv, Uw, $I_U$, Iv, $I_W$) erste Pulse ($P_{f1}$, $P_{f2}$, $P_{f3}$) und durch Kodierung (C) der aufsteigenden Flanken ($Fl_{Uu}$, $Fl_{Vu}$, $Fl_{Wu}$) der jeweiligen Phasensignale ($U_U$, $U_V$, $U_W$, $I_U$, $I_V$, $I_W$) jeweils weitere Pulse ($P_{r1}$, $P_{r2}$, $P_{r3}$) im Summensignal ($U_{Sum}$) erzeugt werden.

3.  Verfahren nach einem der vorstehenden Ansprüche, wobei durch Ermittlung einer der ersten Pulsbreiten ($T_{Pf1}$, $T_{Pf2}$, $T_{Pf3}$) im Summensignal ($U_{sum}$) auf eine abfallende Flanke ($Fl_{Ud}$, $Fl_{Vd}$, $Fl_{Wd}$) erkannt und bei Ermittlung einer der weiteren Pulsbreiten ($T_{Pr1}$, $T_{Pr2}$, $T_{Pr3}$) im Summensignal ($U_{sum}$) auf eine aufsteigende Flanke ($Fl_{Uu}$, $Fl_{Vu}$, $Fl_{Wu}$) erkannt wird.

4.  Verfahren nach einem der vorstehenden Ansprüche, wobei durch Ermitteln zumindest einer Zeitdifferenz ($\Delta t_1$, $\Delta t_2$, $\Delta t_3$) zwischen zwei Pulsen ($P_{f1}$, $P_{f2}$, $P_{f3}$, $P_{r1}$, $P_{r2}$, $P_{r3}$) aus dem Summensignal ($U_{Sum}$) die Drehzahl (n) ermittelt wird.

5.  Verfahren nach einem der vorstehenden Ansprüche, wobei durch Ermitteln zumindest einer ersten zeitlichen Abfolge (A1) an Pulsen ($P_{f1}$, $P_{f2}$, $P_{f3}$, $P_{r1}$, $P_{r2}$, $P_{r3}$) auf eine erste Drehrichtung ($\alpha_+$) oder durch Ermitteln zumindest einer weiteren zeitlichen Abfolge (A2) an Pulsen ($P_{f1}$, $P_{f2}$, $P_{f3}$, $P_{r1}$, $P_{r2}$, $P_{r3}$) auf eine weitere, zur ersten Drehrichtung ($\alpha_+$) verschiedenen Drehrichtung ($\alpha_-$), geschlossen wird.

6.  Verfahren nach einem der vorstehenden Ansprüche, wobei durch Ermitteln der Pulsbreiten ($T_{Pf1}$, $T_{Pf2}$, $T_{Pf3}$, $T_{Pr1}$, $T_{Pr2}$, $T_{Pr3}$) die jeweiligen Pulse ($P_{f1}$, $P_{f2}$, $P_{f3}$, $P_{r1}$, $P_{r2}$, $P_{r3}$) ermittelt und unter Heranziehung von Eigenschaften der elektrischen Maschine (30), aus den Pulsen ($P_{f1}$, $P_{f2}$, $P_{f3}$, $P_{r1}$, $P_{r2}$, $P_{r3}$) die Drehwinkelposition ($\vartheta_1$) des Rotors (32) ermittelt wird.

7.  Verfahren nach Anspruch 6, wobei die Drehwinkelposition ($\vartheta_1$) des Rotors (32) weiter unter Heranziehung eines Drehzahlwerts n zwischen zwei benachbarten Pulsen ($P_{f1}$, $P_{f2}$, $P_{f3}$, $P_{r1}$, $P_{r2}$, $P_{r3}$) und zumindest einem zeitlichen Abstand ($\Delta t_{Pf1}$, $\Delta t_{Pr2}$) zwischen einer Position (P) und einem der Pulse ($P_{f1}$, $P_{f2}$, $P_{f3}$, $P_{r1}$, $P_{r2}$, $P_{r3}$) ermittelt wird.

8.  Verfahren nach einem der vorstehenden Ansprüche, wobei die ermittelte Drehzahl (n) der Welle (17) zur Steuerung der Brennkraftmaschine (112), zur Steuerung der Zündung und/oder der Einspritzung zumindest eines Zylinders der Brennkraftmaschine (112), verwendet wird.

9. Vorrichtung zur Erzeugung eines Summensignals ($U_{Sum}$) aus mehreren Phasensignalen (Uu, $U_V$, $U_W$, $I_U$, $I_V$, $I_W$), das zur Bestimmung einer Drehgröße , insbesondere einer Drehzahl (n), einer Drehwinkelposition ($\vartheta$, $\vartheta_1$) oder einer Drehrichtung ($\alpha_+$, $\alpha_-$) einer Welle (17), insbesondere einer Kurbelwelle (17') einer Brennkraftmaschine (112) verwendbar ist, welche mit einer elektrischen Maschine (30), umfassend einen Rotor (32) und einen Stator (33) mit zumindest zwei Phasenwicklungen (U, V, W), aus denen jeweils zumindest ein Phasensignal (Uu, Uv, Uw, $I_U$, Iv, Iw), aufweisend aufsteigende Flanken ($Fl_{Uu}$, $Fl_{Vu}$, $Fl_{Wu}$), abfallende Flanken ($Fl_{Ud}$, $Fl_{Vd}$, $Fl_{Wd}$) und Nulldurchgänge ($Fl_{U0}$, $Fl_{V0}$, $Fl_{W0}$), ableitbar ist, direkt oder übersetzt gekoppelt ist, mit zumindest zwei Eingängen ($U_1$, $U_2$, $U_3$), über die jeweils ein Phasensignal (Uu, Uv, Uw, $I_U$, Iv, Iw) zu einer Kodiereinheit (80c) geleitet wird, wobei die Kodiereinheit (80c) die einzelnen Phasensignale (Uu, Uv, Uw, $I_U$, Iv, Iw) zu einem Summensignal ($U_{Sum}$) zusammenfasst und zumindest eines der Phasensignale ($U_U$, $U_V$, $U_W$, $I_U$, $I_V$, $I_W$) derart kodiert, dass den aufsteigenden Flanken ($Fl_{Uu}$, $Fl_{Vu}$, $Fl_{Wu}$) und/oder abfallenden Flanken ($Fl_{Ud}$, $Fl_{Vd}$, $Fl_{Wd}$) des zumindest einen Phasensignals (Uu, Uv, Uw, $I_U$, Iv, Iw) jeweils ein charakteristischer Puls ($P_{f1}$, $P_{f2}$, $P_{f3}$, $P_{r1}$, $P_{r2}$, $P_{r3}$) im Summensignal ($U_{Sum}$) zugeordnet wird, wobei die Kodiereinheit (80c) das Summensignal ($U_{Sum}$) an einen Ausgang ($U_{Out}$) zur Ermittlung der Drehgröße ausgibt, **dadurch gekennzeichnet, dass** die Pulse, die einem ersten Flankentyp, aufweisend aufsteigende Flanken ($Fl_{Uu}$, $Fl_{Vu}$, $Fl_{Wu}$) oder absteigende Flanken ($Fl_{Ud}$, $Fl_{Vd}$, $Fl_{Wd}$) zugeordnet sind, eine konstante erste Pulsbreite ($T_{Pf1}$, $T_{Pf2}$, $T_{Pf3}$) aufweisen und die Pulse, die einem entsprechend anderen Flankentyp zugeordnet sind, konstante aber zueinander verschiedene weitere Pulsbreiten ($T_{Pr1}$, $T_{Pr2}$, $T_{Pr3}$) aufweisen.

10. Vorrichtung nach Anspruch 9, wobei die Kodiereinheit (80c) zumindest ein Totzeitglied ($T_{11}$, $T_{12}$, $T_{13}$) aufweist, welches zumindest einem Phasensignal (Uu, $U_V$, $U_W$, $I_U$, $I_V$, $I_W$) der elektrischen Maschine (30) zuordenbar ist, das dem zumindest einen Phasensignal ($U_U$, $U_V$, $U_W$, $I_U$, $I_V$, $I_W$) eine charakteristische Eigenschaft aufgeprägt.

11. Vorrichtung nach Anspruch 9 oder 10, wobei das zumindest eine Totzeitglied ($T_{11}$, $T_{12}$, $T_{13}$) jeweils Widerstände (R3, R6, R9) und Kondensatoren (C1, C2, C3) aufweist, wobei die Pulsbreiten ($T_{Pf1}$, $T_{Pf2}$, $T_{Pf3}$, $T_{Pr1}$, $T_{Pr2}$, $T_{Pr3}$) der Pulse ($P_{f1}$, $P_{f2}$, $P_{f3}$, $P_{r1}$, $P_{r2}$, $P_{r3}$), durch Wahl der jeweiligen Widerstände (R3, R6, R9) und/oder Kondensatoren (C1, C2, C3) dimensionierbar ist.

12. Vorrichtung nach Anspruch 10 oder 11, wobei der Kodiereinheit (80c) eine Trigger-Schaltung (80a, 80b) vorgelagert ist, die ein getriggertes Phasensignal ($U_{UT}$) erzeugt, welches an zumindest einen der Eingänge ($U_1$, $U_2$, $U_3$) der Kodiereinheit (80c) übergeben wird.

13. Vorrichtung nach Anspruch 9 bis 12, wobei die Trigger-Schaltung (80b) ein Totzeitglied (T), aufweisend einen Widerstand ($R_{1c}$) und einen Kondensator ($C_{1c}$), aufweist.

14. Recheneinheit, vorzugsweise ein Motorsteuergerät (122) für eine Brennkraftmaschine (12), die durch eine entsprechende integrierte Schaltung und/oder durch ein auf einem Speicher gespeichertes Computerprogramm dazu eingerichtet ist, ein Verfahren nach einem der Ansprüche 1 bis 9 durchzuführen.

15. Computerprogramm, das eine Recheneinheit dazu veranlasst, ein Verfahren nach einem der Ansprüche 1 bis 8 durchzuführen, wenn es auf der Recheneinheit ausgeführt wird.

16. Maschinenlesbares Speichermedium mit einem darauf gespeicherten Computerprogramm nach Anspruch 15.

**Claims**

1. Method for determining a rotational variable, in particular a rotational angle position ($\vartheta$, $\vartheta_1$) of a shaft (17), in particular a crankshaft (17') of an internal combustion engine (112), which is coupled directly or with transmission to an electric machine (30) comprising a rotor (32) and a stator (33) having at least two phase windings (U, V, W) from which at least one phase signal ($U_U$, Uv, Uw, $I_U$, Iv, Iw) is derived in each case, wherein the phase signals ($U_U$, $U_V$, $U_W$, $I_U$, $I_V$, $I_W$) each have rising edges ($Fl_{Uu}$, $Fl_{Vu}$, $FL_{Wu}$), falling edges ($Fl_{Ud}$, $Fl_{Vd}$, Flwd) and zero crossings ($Fl_{U0}$, $Fl_{V0}$, $Fl_{W0}$), wherein a sum signal ($U_{sum}$) comprising a plurality of phase signals (Uu, Uv, Uw, $I_U$, Iv, Iw) from the electric machine (30) is generated in such a manner that a characteristic pulse ($P_{f1}$, $P_{f2}$, $P_{f3}$, $P_{r1}$, $P_{r2}$, $P_{r3}$) in the sum signal ($U_{sum}$) is respectively assigned to the rising edges ($Fl_{Uu}$, $Fl_{Vu}$, $FL_{Wu}$), falling edges ($Fl_{Ud}$, $Fl_{Vd}$, $Fl_{Wd}$) and zero crossings ($Fl_{U0}$, $Fl_{V0}$, $Fl_{W0}$), wherein the pulses ($P_{f1}$, $P_{f2}$, $P_{f3}$, $P_{r1}$, $P_{r2}$, $P_{r3}$) are used to determine the rotational speed (n), the rotational angle position ($\vartheta$, $\vartheta_1$) or the direction of rotation ($\alpha_+$, $\alpha_-$) of the rotor (32), **characterized in that** the pulses assigned to a first edge type having rising edges ($Fl_{Uu}$, $Fl_{Vu}$, $FL_{Wu}$) or falling edges ($Fl_{Ud}$, $Fl_{Vd}$, $Fl_{Wd}$) have a constant first pulse width ($T_{Pf1}$, $T_{Pf2}$, $T_{Pf3}$) and the pulses assigned to an accordingly different edge type constant but mutually different further pulse widths ($T_{Pr1}$, $T_{Pr2}$, $T_{Pr3}$).

2. Method according to Claim 1, wherein first pulses ($P_{f1}$, $P_{f2}$, $P_{f3}$) are generated in the sum signal ($U_{sum}$) by coding (C) the falling edges ($Fl_{Ud}$, $Fl_{Vd}$, $Fl_{Wd}$) of the respective phase signals ($U_U$, $U_V$, $U_W$, $I_U$, $I_V$, $I_W$) and further pulses ($P_{r1}$, $P_{r2}$, $P_{r3}$) are respectively generated in the sum signal ($U_{sum}$) by coding (C) the rising edges ($Fl_{Uu}$, $Fl_{Vu}$, $FL_{Wu}$) of the respective phase signals (Uu, Uv, $U_W$, $I_U$, $I_V$, $I_W$).

3. Method according to one of the preceding claims, wherein a falling edge ($Fl_{Ud}$, $Fl_{Vd}$, $Fl_{Wd}$) is detected by determining one of the first pulse widths ($T_{Pf1}$, $T_{Pf2}$, $T_{Pf3}$) in the sum signal ($U_{sum}$) and a rising edge (Fluu, $Fl_{Vu}$, $FL_{Wu}$) is detected when determining one of the further pulse widths ($T_{Pr1}$, $T_{Pr2}$, $T_{Pr3}$) in the sum signal ($U_{sum}$).

4. Method according to one of the preceding claims, wherein the rotational speed (n) is determined by determining at least one time difference ($\Delta t_1$, $\Delta t_2$, $\Delta t_3$) between two pulses ($P_{f1}$, $P_{f2}$, $P_{f3}$, $P_{r1}$, $P_{r2}$, $P_{r3}$) from the sum signal ($U_{Sum}$).

5. Method according to one of the preceding claims, wherein a first direction of rotation ($\alpha_+$) is inferred by determining at least one first temporal sequence (A1) of pulses ($P_{f1}$, $P_{f2}$, $P_{f3}$, $P_{r1}$, $P_{r2}$, $P_{r3}$) or a further direction of rotation ($\alpha_-$) which differs from the first direction of rotation ($\alpha_+$) is inferred by determining at least one further temporal sequence (A2) of pulses ($P_{f1}$, $P_{f2}$, $P_{f3}$, $P_{r1}$, $P_{r2}$, $P_{r3}$).

6. Method according to one of the preceding claims, wherein the respective pulses ($P_{f1}$, $P_{f2}$, $P_{f3}$, $P_{r1}$, $P_{r2}$, $P_{r3}$) are determined by determining the pulse widths ($T_{Pf1}$, $T_{Pf2}$, $T_{Pf3}$, $T_{Pr1}$, $T_{Pr2}$, $T_{Pr3}$) and the rotational angle position ($\vartheta_1$) of the rotor (32) is determined from the pulses ($P_{f1}$, $P_{f2}$, $P_{f3}$, $P_{r1}$, $P_{r2}$, $P_{r3}$) using properties of the electric machine (30).

7. Method according to Claim 6, wherein the rotational angle position ($\vartheta_1$) of the rotor (32) is also determined using a rotational speed value n between two adjacent pulses ($P_{f1}$, $P_{f2}$, $P_{f3}$, $P_{r1}$, $P_{r2}$, $P_{r3}$) and at least one interval of time ($\Delta t_{Pf1}$, $\Delta t_{Pr2}$) between a position (P) and one of the pulses ($P_{f1}$, $P_{f2}$, $P_{f3}$, $P_{r1}$, $P_{r2}$, $P_{r3}$).

8. Method according to one of the preceding claims, wherein the determined rotational speed (n) of the shaft (17) is used to control the internal combustion engine (112), to control the ignition and/or the injection of at least one cylinder of the internal combustion engine (112) .

9. Apparatus for generating a sum signal ($U_{sum}$) from a plurality of phase signals ($U_U$, $U_V$, $U_W$, $I_U$, $I_V$, $I_W$), which sum signal can be used to determine a rotational variable, in particular a rotational speed (n), a rotational angle position ($\vartheta$, $\vartheta_1$) or a direction of rotation ($\alpha_+$, $\alpha_-$) of a shaft (17), in particular a crankshaft (17') of an internal combustion engine (112), which is coupled directly or with transmission to an electric machine (30) comprising a rotor (32) and a stator (33) having at least two phase windings (U, V, W), from each of which at least one phase signal ($U_U$, Uv, Uw, Iu, Iv, Iw) having rising edges ($Fl_{Uu}$, Flvu, $FL_{Wu}$), falling edges ($Fl_{Ud}$, $Fl_{Vd}$, $Fl_{Wd}$) and zero crossings ($Fl_{U0}$, $Fl_{V0}$, $Fl_{W0}$) can be derived, having at least two inputs ($U_1$, $U_2$, $U_3$) which are each used to conduct a phase signal ($U_U$, Uv, Uw, $I_U$, Iv, Iw) to a coding unit (80c), wherein the coding unit (80c) combines the individual phase signals (Uu, Uv, Uw, Iu, Iv, Iw) to form a sum signal ($U_{sum}$) and codes at least one of the phase signals (Uu, Uv, Uw, $I_U$, Iv, Iw) in such a manner that a characteristic pulse ($P_{f1}$, $P_{f2}$, $P_{f3}$, $P_{r1}$, $P_{r2}$, $P_{r3}$) in the sum signal ($U_{Sum}$) is respectively assigned to the rising edges ($Fl_{Uu}$, Flvu, $FL_{Wu}$) and/or falling edges ($Fl_{Ud}$, $Fl_{Vd}$, $Fl_{Wd}$) of the at least one phase signal ($U_U$, Uv, Uw, Iu, Iv, $I_W$), wherein the coding unit (80c) outputs the sum signal ($U_{sum}$) to an output ($U_{Out}$) for determining the rotational variable, **characterized in that** the pulses assigned to a first edge type having rising edges ($Fl_{Uu}$, $Fl_{Vu}$, FLwu) or falling edges ($Fl_{Ud}$, $Fl_{Vd}$, $Fl_{Wd}$) have a constant first pulse width ($T_{Pf1}$, $T_{Pf2}$, $T_{Pf3}$) and the pulses assigned to an accordingly different edge type have constant but mutually different further pulse widths ($T_{Pr1}$, $T_{Pr2}$, $T_{Pr3}$).

10. Apparatus according to Claim 9, wherein the coding unit (80c) has at least one delay element (Tn, $T_{12}$, $T_{13}$) which can be assigned to at least one phase signal ($U_U$, $U_V$, $U_W$, $I_U$, $I_V$, $I_W$) from the electric machine (30), which delay element impresses a characteristic property on the at least one phase signal ($U_U$, $U_V$, $U_W$, $I_U$, $I_V$, $I_W$).

11. Apparatus according to Claim 9 or 10, wherein the at least one delay element ($T_{11}$, $T_{12}$, $T_{13}$) respectively has resistors (R3, R6, R9) and capacitors (C1, C2, C3), wherein the pulse widths ($T_{Pf1}$, $T_{Pf2}$, $T_{Pf3}$, $T_{Pr1}$, $T_{Pr2}$, $T_{Pr3}$) of the pulses ($P_{f1}$, $P_{f2}$, $P_{f3}$, $P_{r1}$, $P_{r2}$, $P_{r3}$) can be dimensioned by choosing the respective resistors (R3, R6, R9) and/or capacitors (C1, C2, C3) .

12. Apparatus according to Claim 10 or 11, wherein a trigger circuit (80a, 80b) is upstream of the coding unit (80c) and generates a triggered phase signal ($U_{UT}$) which is transferred to at least one of the inputs ($U_1$, $U_2$, $U_3$) of the coding unit (80c).

13. Apparatus according to Claims 9 to 12, wherein the trigger circuit (80b) has a delay element (T) having a resistor ($R_{1c}$) and a capacitor ($C_{1c}$).

14. Computing unit, preferably an engine control unit (122) for an internal combustion engine (12), which is configured, by means of an appropriate integrated circuit and/or by means of a computer program stored in a memory, to carry out a method according to one of Claims 1 to 9.

15. Computer program which causes a computing unit to carry out a method according to one of Claims 1 to 8 when it is executed on the computing unit.

16. Machine-readable storage medium having computer program according to Claim 15 stored thereon.


**Revendications**

1. Procédé permettant de déterminer une grandeur de rotation, en particulier une position d'angle de rotation ($\vartheta, \vartheta_1$), d'un arbre (17), en particulier d'un vilebrequin (17') d'un moteur à combustion interne (112) qui est accouplé directement ou par engrenage à une machine électrique (30) comprenant un rotor (32) et un stator (33) pourvu d'au moins deux enroulements de phase (U, V, W) dont respectivement au moins un signal de phase ($U_U$, $U_V$, $U_W$, $I_U$, $I_V$, $I_W$) est dérivé, dans lequel les signaux de phase ($U_U$, $U_V$, $U_W$, $I_U$, $I_V$, $I_W$) présentent respectivement des flancs montants ($FI_{Uu}$, $FI_{Vu}$, $FI_{Wu}$), des flancs descendants ($FI_{Ud}$, $FI_{Vd}$, $FI_{Wd}$) et des passages par zéro ($FI_{U0}$, $FI_{V0}$, $FI_{W0}$), dans lequel un signal de somme ($U_{Sum}$) comprenant plusieurs signaux de phase (Uu, $U_V$, $U_W$, $I_U$, $I_V$, $I_W$) de la machine électrique (30) est généré de telle sorte que respectivement une impulsion caractéristique ($P_{f1}$, $P_{f2}$, $P_{f3}$, $P_{r1}$, $P_{r2}$, $P_{r3}$) dans signal de somme ($U_{Sum}$) est associée aux flancs montants ($FI_{Uu}$, $FI_{Vu}$, $FI_{Wu}$), aux flancs descendants ($FI_{Ud}$, $FI_{Vd}$, $FI_{Wd}$) et aux passages par zéro ($FI_{U0}$, $FI_{V0}$, $FI_{W0}$), dans lequel les impulsions ($P_{f1}$, $P_{f2}$, $P_{f3}$, $P_{r1}$, $P_{r2}$, $P_{r3}$) sont utilisées pour établir la vitesse de rotation (n), la position d'angle de rotation ($\vartheta, \vartheta_1$) ou le sens de rotation ($\alpha_+$, $\alpha_-$) du rotor (32),
**caractérisé en ce que** les impulsions qui sont associées à un premier type de flanc présentant des flancs montants ($FI_{Uu}$, $FI_{Vu}$, $FI_{Wu}$) ou des flancs descendants ($FI_{Ud}$, $FI_{Vd}$, $FI_{Wd}$) présentent une première largeur d'impulsion constante ($T_{Pf1}$, $T_{Pf2}$, $T_{Pf3}$) et les impulsions qui sont associées à un autre type de flanc correspondant présentent d'autres largeurs d'impulsion constantes ($T_{Pr1}$, $T_{Pr2}$, $T_{Pr3}$) mais différentes entre elles.

2. Procédé selon la revendication 1, dans lequel le codage (C) des flancs descendants ($FI_{Ud}$, $FI_{Vd}$, $FI_{Wd}$) des signaux de phase ($U_U$, $U_V$, $U_W$, $I_U$, $I_V$, $I_W$) respectifs génère des premières impulsions ($P_{f1}$, $P_{f2}$, $P_{f3}$), et le codage (C) des flancs montants ($FI_{Uu}$, $FI_{Vu}$, $FI_{Wu}$) des signaux de phase ($U_U$, $U_V$, $U_W$, $I_U$, $I_V$, $I_W$) respectifs génère respectivement d'autres impulsions ($P_{r1}$, $Pr_2$, $P_{r3}$) dans le signal de somme ($U_{Sum}$).

3. Procédé selon l'une quelconque des revendications précédentes, dans lequel l'établissement d'une des premières largeurs d'impulsion ($T_{Pf1}$, $T_{Pf2}$, $T_{Pf3}$) dans le signal de somme ($U_{Sum}$) permet de détecter un flanc descendant ($FI_{Ud}$, $FI_{Vd}$, $FI_{Wd}$), et lors de l'établissement d'une des autres largeurs d'impulsion ($T_{Pr1}$, $T_{Pr2}$, $T_{Pr3}$) dans le signal de somme ($U_{Sum}$) un flanc montant ($FI_{Uu}$, $FI_{Vu}$, $FI_{Wu}$) est détecté.

4. Procédé selon l'une quelconque des revendications précédentes, dans lequel l'établissement d'au moins une différence de temps ($\Delta t_1$, $\Delta t_2$, $\Delta t_3$) entre deux impulsions ($P_{f1}$, $P_{f2}$, $P_{f3}$, $P_{r1}$, $P_{r2}$, $P_{r3}$) permet d'établir la vitesse de rotation (n) à partir du signal de somme ($U_{Sum}$).

5. Procédé selon l'une quelconque des revendications précédentes, dans lequel l'établissement d'au moins une première séquence temporelle (A1) sur des impulsions ($P_{f1}$, $P_{f2}$, $P_{f3}$, $P_{r1}$, $P_{r2}$, $P_{r3}$) permet de conclure à un premier sens de rotation ($\alpha_+$) ou l'établissement d'au moins une autre séquence temporelle (A2) sur des impulsions ($P_{f1}$, $P_{f2}$, $P_{f3}$, $P_{r1}$, $P_{r2}$, $P_{r3}$) permet de conclure à un autre sens de rotation ($\alpha_-$) différent du premier sens de rotation ($\alpha_+$).

6. Procédé selon l'une quelconque des revendications précédentes, dans lequel l'établissement des largeurs d'impulsion ($T_{Pf1}$, $T_{Pf2}$, $T_{Pf3}$, $T_{Pr1}$, $T_{Pr2}$, $T_{Pr3}$) permet d'établir les impulsions respectives ($P_{f1}$, $P_{f2}$, $P_{f3}$, $P_{r1}$, $P_{r2}$, $P_{r3}$), et en faisant appel à des propriétés de la machine électrique (30), d'établir à partir des impulsions ($P_{f1}$, $P_{f2}$, $P_{f3}$, $P_{r1}$, $P_{r2}$, $P_{r3}$) la position d'angle de rotation ($\vartheta_1$) du rotor (32) .

7. Procédé selon la revendication 6, dans lequel la position d'angle de rotation ($\vartheta_1$) du rotor (32) est en outre établie en faisant appel à une valeur de vitesse de rotation n entre deux impulsions voisines ($P_{f1}$, $P_{f2}$, $P_{f3}$, $P_{r1}$, $P_{r2}$, $P_{r3}$) et à au moins une distance temporelle ($\Delta t_{Pf1}$, $\Delta t_{Pr2}$) entre une position (P) et l'une des impulsions ($P_{f1}$, $P_{f2}$, $P_{f3}$, $P_{r1}$, $P_{r2}$, $Pr_3$).

8. Procédé selon l'une quelconque des revendications précédentes, dans lequel la vitesse de rotation (n) établie de l'arbre (17) est utilisée pour commander le moteur à combustion interne (112), pour commander l'allumage et/ou l'injection d'au moins un cylindre du moteur à combustion interne (112).

9. Dispositif permettant de générer un signal de somme ($U_{Sum}$) à partir de plusieurs signaux de phase (Uu, Uv, Uw, $I_U$, Iv, Iw) qui peut être utilisé pour déterminer une grandeur de rotation, en particulier une vitesse de rotation (n), une position d'angle de rotation ($\vartheta, \vartheta_1$) ou un sens de rotation ($\alpha_+$, $\alpha_-$) d'un arbre **(17)**, en particulier d'un vilebrequin (17') d'un moteur à combustion interne (112) qui est accouplé directement ou par engrenages à une machine électrique (30) comprenant un rotor (32) et un stator (33) muni d'au moins deux enroulements de phase (U, V, W) à partir desquels respectivement au moins un signal de phase (Uu, $U_V$, $U_W$, $I_U$, $I_V$, $I_W$) peut être dérivé, présentant des flancs montants ($Fl_{Uu}$, $Fl_{Vu}$, $Fl_{Wu}$), des flancs descendants ($Fl_{Ud}$, $Fl_{Vd}$, $Fl_{Wd}$) et des passages par zéro ($Fl_{U0}$, $Fl_{V0}$, $Fl_{W0}$), comprenant au moins deux entrées ($U_1$, $U_2$, $U_3$) par lesquelles respectivement un signal de phase ($U_U$, $U_V$, $U_W$, $I_U$, $I_V$, $I_W$) est conduit à une unité de codage (80c), dans lequel l'unité de codage (80c) regroupe les signaux de phase ($U_U$, $U_V$, $U_W$, $I_U$, $I_V$, $I_W$) individuels en un signal de somme ($U_{Sum}$) et code au moins l'un des signaux de phase ($U_U$, $U_V$, $U_W$, $I_U$, $I_V$, $I_W$) de telle sorte qu'une impulsion caractéristique ($P_{f1}$, $P_{f2}$, $P_{f3}$, $P_{r1}$, $P_{r2}$, $P_{r3}$) dans le signal de somme ($U_{Sum}$) est associée aux flancs montants ($Fl_{Uu}$, $Fl_{Vu}$, $Fl_{Wu}$) et/ou aux flancs descendants ($Fl_{Ud}$, $Fl_{Vd}$, $Fl_{Wd}$) du au moins un signal de phase ($U_U$, $U_V$, $U_W$, $I_U$, $I_V$, $I_W$), dans lequel l'unité de codage (80c) sort le signal de somme (Usum) à une sortie ($U_{Out}$) pour établir la grandeur de rotation, **caractérisé en ce que** les impulsions qui sont associées à un premier type de flanc présentant des flancs montants ($Fl_{Uu'}$, $Fl_{Vu'}$, $Fl_{Wu}$) ou des flancs descendants ($Fl_{Ud'}$, $Fl_{Vd'}$, Flwa) présentent une première largeur d'impulsion constante ($T_{Pf1'}$, $T_{Pf2'}$, $T_{Pf3}$), et les impulsions qui sont associées à un autre type de flanc de façon correspondante présentent d'autres largeurs d'impulsion constantes ($T_{Pr1'}$, $T_{Pr2'}$, $T_{Pr3}$) mais différentes entre elles.

10. Dispositif selon la revendication 9, dans lequel l'unité de codage (80c) présente au moins un élément de temps mort ($T_{11}$, $T_{12}$, $T_{13}$) qui peut être associé à au moins un signal de phase ($U_U$, $U_V$, $U_W$, $I_U$, $I_V$, $I_W$) du moteur à combustion interne (30) qui confère audit au moins un signal de phase ($U_U$, $U_V$, $U_W$, $I_U$, $I_V$, $I_W$) une propriété caractéristique.

11. Dispositif selon la revendication 9 ou 10, dans lequel ledit au moins un élément de temps mort ($T_{11}$, $T_{12}$, $T_{13}$) présente respectivement des résistances (R3, R6, R9) et des condensateurs (C1, C2, C3), dans lequel les largeurs d'impulsion ($T_{Pf1}$, $T_{Pf2}$, $T_{Pf3}$, $T_{Pr1}$, $T_{Pr2}$, $T_{Pr3}$) des impulsions ($P_{f1}$, $P_{f2}$, $P_{f3}$, $P_{r1}$, $Pr_2$, $P_{r3}$) peuvent être dimensionnées par le choix des résistances (R3, R6, R9) et/ou des condensateurs (C1, C2, C3) respectifs.

12. Dispositif selon la revendication 10 ou 11, dans lequel un circuit de déclenchement (80a, 80b) est placé en amont de l'unité de codage (80c) et génère un signal de phase déclenché ($U_{UT}$) qui est transféré à au moins l'une des entrées ($U_1$, $U_2$, $U_3$) de l'unité de codage (80c) .

13. Dispositif selon la revendication 9 à 12, dans lequel le circuit de déclenchement (80b) présente un élément de temps mort (T) présentant une résistance ($R_{1c}$) et un condensateur ($C_{1c}$).

14. Unité de calcul, de préférence appareil de commande de moteur (122) pour un moteur à combustion interne (12), qui est conçue par un circuit intégré correspondant et/ou par un programme informatique stocké dans une mémoire pour exécuter un procédé selon l'une quelconque des revendications 1 à 9.

15. Programme informatique qui fait d'une unité de calcul exécute un procédé selon l'une quelconque des revendications 1 à 8 lorsqu'il est exécuté sur l'unité de calcul.

16. Support de stockage lisible par machine, comprenant un programme informatique selon la revendication 15 stocké sur celui-ci.

Fig. 1

LR

B

110

124

122

112

$h_{EM}$

$\alpha+$

$\vartheta, \vartheta_1$

$h_{BKM}$

30

17'

17

$\alpha-$

**Fig. 2a**

**Fig. 2b**

**Fig. 2c**

Fig. 3

80a

$U_{I1}$

$U_{O1}$

O

$R_{1a}$

$R_{2a}$

**Fig. 4a**

$U_{I1}$

$U_U$

$U_{O1}$

$U_{UT}$

FL

FL

FL

**Fig. 4b**

Fig. 5a

Fig. 5b

Fig. 5c

Fig. 6a

Fig. 6b

Fig. 7a

Fig. 7b

Fig. 8a

Fig. 8b

Fig. 8c

Fig. 8d

Fig. 9

Fig. 10a

Fig. 10b

Fig. 10c

Fig. 10d

Fig. 10e

Fig. 10f

EP 3 724 476 B1

Fig. 11a

Fig. 11b

Fig. 11c

Fig. 12

EP 3 724 476 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0664887 B1
- US 2017155346 A1